# EUROPEAN PATENT APPLICATION

(11) **EP 4 332 132 A1**
(43) Date of publication of application: **06.03.2024**
(21) Application number: 22794731.4
(22) Date of filing: 21.04.2022
(51) Int. Cl.: C08F 210/06, C08F 210/16, C08F 4/6592, C08L 23/10, C08L 23/14

(54) **PROPYLENE-BASED COPOLYMER, PREPARATION METHOD THEREFOR AND USE THEREOF, AND POLYPROPYLENE COMPOSITION CONTAINING SAME**

(30) Priority: 25.04.2021 CN 202110448666; 25.04.2021 CN 202110449881; 25.04.2021 CN 202110449898
(71) Applicant: China Petroleum & Chemical Corporation, Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: SONG, Wenbo, Beijing 100013 (CN); FANG, Yuanyuan, Beijing 100013 (CN); HAN, Shuliang, Beijing 100013 (CN); JIN, Zhao, Beijing 100013 (CN); WANG, Lusheng, Beijing 100013 (CN); LYU, Jinglan, Beijing 100013 (CN)
(74) Representative: Hoffmann Eitle
(86) International application number: PCT/CN2022/088102
(87) International publication number: WO 2022/228260

(57) **Abstract**

The invention belongs to the field of olefin polymerization and relates to a propylene-based copolymer, its preparation process and use, and a polypropylene composition thereof. The propylene-based copolymer can contain 60-95wt% of propylene-derived structural units and 5-40wt% of comonomer-derived structural units; the propylene-based copolymer has a comonomer dispersion degree D_{[PCP]/[C]} in the range of 50%-70%, wherein the comonomer dispersion degree D_{[PCP]/[C]}=[PCP]/[C]×100%. Upon blending the propylene-based copolymer of the present invention with a polypropylene, the copolymer has excellent compatibility with polypropylene, and can promote the crystallization of the polypropylene and can improve the mechanical properties of the resulting polypropylene material.

## Description

### Technical Field

The present invention belongs to the field of olefin polymerization. Specifically, the present invention relates to a propylene-based copolymer, a preparation process for the propylene-based copolymer, use of the propylene-based copolymer, and a polypropylene composition containing the propylene-based copolymer.

### Background Technologies

Propylene-based copolymers are a class of polyolefin materials that are extremely widely used. Propylene-alpha-olefin copolymers with high comonomer content have a characteristic of high elasticity and can be used as thermoplastic elastomers for impact modification of polypropylene materials. However, as the comonomer content increases, especially when the comonomer content reaches 10wt% or higher, the compatibility of a propylene-based copolymer with polypropylene will decrease. The incorporation of the propylene-based copolymer will hinder the crystallization of a polypropylene material, thereby affecting the mechanical properties of the material. Accordingly, it would be desirable to obtain a propylene-alpha-olefin copolymer with a high comonomer content, which can promote the crystallization of the polypropylene when incorporated into the polypropylene to form a blended material. The crystallization of the propylene-alpha-olefin copolymer is usually associated with the dispersion degree of comonomers in the propylene segments.

A propylene-alpha-olefin copolymer with a high comonomer content has a characteristic of high elasticity and has a low glass transition temperature, allowing it to be used in a low-temperature environment. However, due to its slow crystallization and high stickiness, it may cause adhesion and agglomeration problems in the pellets during storage and transportation. A propylene copolymer with a high comonomer content usually has a lower initial melting temperature, leading to more serious adhesion and agglomeration problems during storage and transportation in high-temperature areas, especially in summer. Therefore, there is an urgent need in this field to develop a propylene-based polymer with a high comonomer content and a high initial melting temperature to solve the problems of adhesion and agglomeration during storage and transportation.

It is well known that chiral bis-indenyl metallocene catalysts can be used to prepare highly crystalline isotactic polypropylene and its copolymers. WO2002/01745, US2002/0004575A1, WO2002/083753A1, and US6525157 disclose processes for the preparation of a propylene/ethylene copolymer containing tacticity within the propylene sequences using a chiral metallocene rac-Me₂Si(1-indenyl)₂HfMe₂. US 6057408 discloses a process for the preparation of high molecular weight propylene/ethylene copolymers with high crystallinity in the propylene sequences using chiral bis-indenyl metallocenes.

US5767208 and EP0612768 mention ionic catalyst systems based on a bridged bis-cyclopentadienyl hafnium, which can be used to prepare a high molecular weight ethylene-alpha-olefin copolymer in high-temperature solution polymerization. Other useful references include CN101124235B, US5455365, US6084115, CN110272515A, and Organometallics 1992, 11, 2115.

However, the propylene-alpha-olefin copolymers with high comonomer contents prepared in the prior art still suffer from the above-mentioned shortcomings. Accordingly, it would be desirable in the art to provide propylene-based copolymers that can eliminate one or more of the above shortcomings.

### Summary of the Invention

The objects of the present invention are to provide a propylene-based copolymer, its preparation process and use, and a polypropylene composition containing the propylene-based copolymer.

A first aspect of the present invention provides a propylene-based copolymer, wherein the propylene-based copolymer contains propylene-derived structural units and comonomer-derived structural units, preferably the propylene-based copolymer contains 60-95wt% of the propylene-derived structural units and 5-40wt% of the comonomer-derived structural units; the comonomer is at least one of ethylene and C₄-C₂₀ alpha-olefins; the propylene-based copolymer has a comonomer dispersion degree D_{[PCP]/[C]} in the range of 50%-70%, wherein the comonomer dispersion degree D_{[PCP]/[C]}=[PCP]/[C]×100%, wherein [PCP] is the amount of monodispersed comonomer structural units in the propylene-based copolymer, wherein the monodispersed comonomer structural unit is a comonomer structural unit that exists in the form of a single comonomer structural unit inserted into a propylene segment, and [C] is the total amount of comonomer structural units in the propylene-based copolymer.

A second aspect of the present invention provides a process for preparing the above-mentioned propylene-based copolymer, which process comprises:
(A) pre-contacting a primary catalyst and a cocatalyst to form in situ in a pipeline connected to a polymerization reactor a homogeneous ionic catalyst solution in a solvent; and
(B) sending the homogeneous ionic catalyst solution obtained in step (A) into the polymerization reactor through the pipeline connected to the polymerization reactor to contact with propylene monomer, one or more comonomers, and optionally hydrogen to perform an olefin polymerization to produce the propylene-based copolymer.

According to an embodiment of the present invention, the primary catalyst is a metallocene catalyst, preferably at least one of the compounds represented by formula (I); 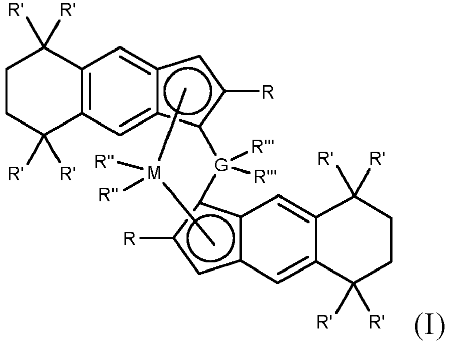
in the formula (I), M is a metal selected from titanium, hafnium or zirconium; G is carbon, silicon, germanium, tin or lead; R and R' are each independently selected from hydrogen, and a substituted or unsubstituted C₁-C₂₀ hydrocarbyl; each R" is independently selected from a hydrogen atom, a halogen atom, a C₁-C₂₀ hydrocarbyl group, a C₁-C₂₀ alkoxy group or a C₆-C₂₀ aryloxy group, and these groups are straight, branched or cyclic and optionally further substituted with a halogen atom, a C₁-C₁₀ alkyl, a C₁-C₁₀ alkoxy, a C₆-C₁₀ aryl or a C₆-C₁₀ aryloxy; each R‴ is independently selected from a hydrogen atom, a C₁-C₂₀ hydrocarbyl group, a C₁-C₂₀ alkoxy group or a C₆-C₂₀ aryloxy group; and/or
the cocatalyst is a boron-containing compound-type cocatalyst, an aluminoxane-type cocatalyst, or a combination thereof.

A third aspect of the present invention provides a polymer composition comprising the propylene-based copolymer of the present invention; preferably the polymer composition comprises the propylene-based copolymer of the present invention and at least one additional polymer; more preferably the polymer composition comprises a polypropylene and the propylene-based copolymer of the present invention, wherein the polypropylene includes a polypropylene homopolymer, a polypropylene copolymer different from the propylene-based copolymer of the present invention, or a combination thereof.

A fourth aspect of the present invention provides use of the propylene-based copolymer of the present invention in preparing a polypropylene composition, the polypropylene composition comprises a polypropylene and the propylene-based copolymer.

The propylene-based copolymer of the present invention has a relatively high comonomer content and simultaneously has a specially selected comonomer dispersion degree. The present inventors surprisingly found that by selecting the comonomer dispersion degree from a specific range, a propylene-based copolymer with desired properties can be obtained. Upon blending the propylene-based copolymer of the present invention with a polypropylene, the copolymer has excellent compatibility with the polypropylene, can promote the crystallization of the polypropylene and can improve the mechanical properties of the resulting polypropylene material.

It is known in the art that metallocene catalysts generally have poor solubility in aliphatic hydrocarbons, and the catalysts have a short storage time after being dissolved. The process for preparing the propylene-based copolymer of the present invention can form a homogeneous ionic catalyst solution in situ in the pipeline so that the catalyst system has excellent polymerization activity (especially at higher temperatures, e.g. 80°C or higher) and comonomer selectivity, which in turn enables the production of olefin polymers with higher comonomer content and relatively low, particularly favorable comonomer dispersion degree. In addition, for continuous solution polymerization processes, the present invention enables the catalyst to form active centers in situ in the pipeline and inject into the polymerization reactor in the form of a homogeneous aliphatic solution, which has obvious advantages in the operation.

Reference in this specification to "an embodiment" or "some embodiments" means that a feature, structure, or characteristic described in connection with the embodiment(s) is included in at least one embodiment. In one or more embodiments, these features, structures, or characteristics can be combined in any suitable manner.

The individual embodiments in this specification may be combined with each other, but combinations that violate the laws of nature and that are excluded by those skilled in the art based on their professional knowledge are not included.

Various types of ranges are disclosed in this specification. These ranges include but are not limited to, content ranges, numerical ranges, weight ratio ranges, mole ratio ranges, and the like. When the applicant discloses or claims any type of a range, the applicant intends to separately disclose or claim every possible range and value that the range can reasonably cover, including the endpoints of the range, the point values and any sub-ranges within the range, and combinations of sub-ranges included therein. In addition, when the applicant discloses or claims any type of a range and discloses a range and a point value(s) within the range, the range of this application may specifically include a range formed by combining any end value of the given range and any point value, or a range formed by combining any two point values.

Except for the examples provided at the end of the "Detailed Description" section, the numerical values (such as quantities or conditions) in this specification (including the accompanying claims) should be understood to be modified with the term "about" in all cases, regardless of whether "about" actually appears before the numerical values. "About" means that the numerical value allows for a certain degree of slight inaccuracy. If the inaccuracy provided by "about" is not understood in this ordinary sense in the art, "about" as used herein refers at least to a variation that may result from ordinary methods of measuring and using such parameters. For example, "about" can include variations of less than or equal to 5%, optionally less than or equal to 4%, optionally less than or equal to 3%, optionally less than or equal to 2%, optionally less than or equal to 1%, optionally in certain aspects less than or equal to 0.5% and optionally less than or equal to 0.1%.

As used herein, the singular forms "a", "an", and "the" are intended to include the plural forms as well, unless the context clearly dictates otherwise. The terms "comprising", "including", "containing" and "having" are inclusive and thus state the presence of the described features, elements, compositions, steps, integers, operations, and/or components but do not exclude the presence or addition of one or more other features, integers, steps, operations, elements, components and/or collections thereof. Although the open-ended term "comprising" should be understood as a nonlimiting term for describing and claiming the various embodiments described herein, in certain aspects this term may instead be understood to mean a more restrictive and limiting term such as "consisting of" or "consisting essentially of".

Other features and advantages of the present invention will be described in detail in the following detailed description.

### Brief description of the drawings

Exemplary embodiments of the present invention are described in more detail with reference to the accompanying drawings.
Figure A1 shows the dynamic mechanical analysis curves of the polypropylene material before and after incorporating the propylene-based copolymer of Example A4 of the present invention.
Figure A2 shows the dynamic mechanical analysis curves of the polypropylene material before and after incorporating the propylene-based copolymer of Example A6 of the present invention.
Figure A3 shows the crystallization temperatures (determined by the DSC test) of the polypropylene compositions into which are incorporated the propylene-based copolymers of Examples A1-A4 with different ethylene contents and the propylene-based copolymers of Comparative Examples B2 and B3.
Figure C1 to Figure C3 respectively show the DSC curves of the polypropylene compositions prepared in Examples C1-C3.
Figure D shows the dynamic mechanical analysis curves of the homopolymerized polypropylene material before and after incorporating the propylene-based copolymer of Comparative Example B 1.

### Detailed Description

Embodiments of the present invention will be described in detail below. It should be understood that the embodiments described herein are only used to illustrate and explain the present invention and are not intended to limit the present invention.

### Propylene-based copolymer

The present invention provides a propylene-based copolymer, wherein the propylene-based copolymer contains propylene-derived structural units and comonomer-derived structural units, preferably the propylene-based copolymer contains 60-95wt% of the propylene-derived structural units and 5-40wt% of the comonomer-derived structural units; more preferably the propylene-based copolymer contains 75-93wt% of the propylene-derived structural unit and 7-25wt% of the comonomer-derived structural unit; the comonomer is at least one of ethylene and C₄-C₂₀ alpha-olefins; the propylene-based copolymer has a comonomer dispersion degree D_{[PCP]/[C]} in the range of 50%-70%, preferably 60%-70%, for example 50%, 51%, 52%, 53%, 54%, 55%, 56%, 57%, 58%, 59%, 60%, 61%, 62%, 63%, 64%, 65%, 66%, 67%, 68%, 69%, 70%. The comonomer dispersion degree D_{[PCP]/[C]}=[PCP]/[C]×100%, wherein [PCP] is the amount of monodispersed comonomer structural units in the propylene-based copolymer, wherein the monodispersed comonomer structural unit is a comonomer structural unit that exists in the form of a single comonomer structural unit inserted into a propylene segment, and [C] is the total amount of comonomer structural units in the propylene-based copolymer.

In the present invention, the weight percentages of the propylene-derived structural units and the comonomer-derived structural units of the propylene-based copolymer are those based on the total weight of the propylene-based copolymer.

According to the present invention, the "comonomer dispersion degree" represents the degree of dispersion of comonomer in the propylene segment. PCP represents a monodispersed comonomer structural unit, and refers to a comonomer structural unit that exists in the form of propylene monomeric structural unit (P)-one single comonomer structural unit (C)-propylene monomeric structural unit (P), and [PCP] represents the amount of such structural units; the ratio of which to the total amount of the comonomer structural units is the comonomer dispersion degree D_{[PCP]/[C]}. The total amount of comonomer structural units [C] and the amount of monodispersed comonomer structural units [PCP] can be obtained through ¹³C NMR, wherein, the "numeric values" of [PCP] and [C] can be expressed in same unit, for example, both in mole (molar amounts) or both in weight (weight amounts).

The comonomer dispersion degree D_{[PCP]/[C]} can be measured by ¹³C NMR. ¹³C NMR spectroscopy is a method known in the art of measuring the amount of comonomers incorporated into a polymer as well as the connecting manners by which the comonomer structural units are incorporated into the polymer chain. See, for example, Journal of Macromolecular Science, Reviews in Macromolecular Chemistry and Physics, C29(2&3), 201-317(1989). The basic procedure for determining the comonomer content in an olefin copolymer involves obtaining a ¹³C NMR spectrum under such conditions that the intensities of peaks corresponding to different carbons in a sample are directly proportional to the total amount of contributing nuclei in the sample. Methods for ensuring this proportionality are known in the art and include allowing sufficient relaxation time after pulsing, using gated decoupling techniques, using relaxants, and similar methods. After obtaining a ¹³C NMR spectrum and integrating the peaks, peaks associated with the monomeric structural units are assigned. Such assignment is known in the art and can be performed, for example, with reference to known spectra or literature, by synthesis and analysis of model compounds, or by using isotopically labeled monomers. The comonomer dispersion degree can be determined by the ratio of the peak integral value corresponding to the monodispersed comonomer structural units to the peak integral value corresponding to all comonomer structural units in the copolymer.

For the case of more than one comonomer, in said equation D_{[PCP]/[C]}=[PCP]/[C]×100%, [PCP] is the total amount of monodispersed comonomer structural units in the propylene-based copolymer, and [C] is the total amount of all comonomer structural units in the propylene-based copolymer.

The propylene-based polymer of the present invention has a high comonomer content. The "high comonomer content" as used herein refers to a comonomer content of greater than or equal to 5 wt% based on the total weight of the propylene-based copolymer. In the present invention, the comonomer content can be 5 wt% to 40 wt%, preferably 7 wt% to 25 wt%, and more preferably 10 wt% to 25 wt%. In the present invention, the comonomer content can be, for example, 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, 31wt%, 32wt%, 33wt%, 34wt%, 35wt%, 36wt%, 37wt%, 38wt%, 39wt%, or 40wt%.

The comonomer content can be measured on an infrared spectrophotometer such as Perkin Elmer PE1760 as follows: the propylene-based copolymer is pressed into a thin, uniform film at a temperature of approximately 150 °C or higher, and then fixed on the infrared spectrophotometer. The complete spectra of the sample from 600cm⁻¹ to 4000cm⁻¹ are recorded, and the weight percent of the comonomer can be calculated according to the following equation: comonomer wt%=82.585-111.987x+30.045x², where x is the ratio of the peak height at 1155cm⁻¹ to the peak height at 722 cm⁻¹ or 732 cm⁻¹ (whichever is higher).

The comonomer is preferably ethylene, 1-butene, and/or 1-hexene. In the most preferable embodiments, the comonomer is ethylene.

In embodiments in which the comonomer is ethylene, the propylene-based copolymer of the present invention is a propylene-ethylene copolymer. In the propylene-ethylene copolymer, the ethylene monomer dispersion degree D_{[PEP]/[E]} is in the range of 50%-70%, preferably 60%-70%; for example, 50%, 51%, 52%, 53%, 54%, 55%, 56%, 57%, 58%, 59%, 60%, 61%, 62%, 63%, 64%, 65%, 66%, 67%, 68%, 69%, or 70%. The ethylene monomer dispersion degree D_{[PEP]/[E]} = [PEP]/[E]×100%, wherein [PEP] is the amount of monodispersed ethylene monomer structural units in the propylene-ethylene copolymer, wherein the monodispersed ethylene monomer structural unit is an ethylene monomer structural unit that exists in the form of a single ethylene monomer structural unit inserted into the propylene segment, and [E] is the total amount of ethylene monomer structural units in the propylene-ethylene copolymer.

According to some embodiments, in the propylene-ethylene copolymer of the present invention, the proportion of triad ethylene monomer units [EEE]/[E] is 3.5-5%; and/or the proportion of diad ethylene monomer units [EE]/[E] is 15-20%.

In some embodiments, the propylene-based copolymer consists essentially of propylene monomer structural units and ethylene monomer structural units or consists of propylene monomer structural units and ethylene monomer structural units.

According to some embodiments described herein, ethylene is used as the comonomer, but these embodiments are equally applicable to propylene-based copolymers with other alpha-olefins as comonomers.

The triad tacticity (mmm tacticity) of the propylene-based copolymer of the present invention is measured by ¹³C NMR on a nuclear magnetic resonance instrument such as Bruker-300 using deuterated chloroform as solvent at 110°C; and the reference to the method in the US patent US7232871 can be made in details. The mmm tacticity of the propylene-based copolymer of the present invention is preferably 75%-99%, more preferably 80%-97%.

The tacticity index m/r of the propylene-based copolymer of the present invention is measured by ¹³C NMR, as described in H.N. Cheng in Macromolecules, Vol. 17, pp. 1950-1955 (1984). The stereochemistry of a pair of adjacent propylene monomer structural units is described by m and r, wherein m represents meso and r represents racemic. An m/r of 1 generally describes a syndiotactic polymer, while an m/r of 2 describes an atactic material. The m/r of the propylene-based copolymer of the present invention is preferably 3-15.

The density of the propylene-based copolymer of the present invention is preferably 0.84-0.92 g/cc, more preferably 0.85-0.89 g/cc. The density is measured with the test method ASTM D-1505 at room temperature.

As used herein, "room temperature" refers to about 25°C.

The propylene-based copolymer of the present invention can have a melt flow rate (MFR) under a load of 2.16kg and at 190°C of lower than or equal to 100g/10min, preferably lower than or equal to 20g/10min, and greater than 0.5g/10min; and it can be measured by the test method ASTM D-1238.

In some embodiments, the propylene-based copolymer of the present invention has a melt index of 0.5-50g/10min (190°C; 2.16kg).

The blending of the propylene-based copolymer of the present invention with a polypropylene will promote the crystallization of the polypropylene. Said polypropylene includes a polypropylene homopolymer, a polypropylene copolymer different from the propylene-based copolymer of the present invention, or a combination thereof. The polypropylene copolymer different from the propylene-based copolymer of the present invention contains 95-100wt% of propylene-derived structural units and 0-5wt% of comonomer-derived structural units; wherein the optional comonomers are each independently selected from at least one of ethylene and C₄-C₂₀ alpha-olefins.

Therefore, in a polypropylene composition including the polypropylene and the propylene-based copolymer of the present invention, the propylene-based copolymer can serve as a polypropylene crystallization promotor. The propylene-based copolymer of the present invention can improve the mechanical properties of the polypropylene material. Therefore, the propylene-based copolymer can also be used as a modifier for polypropylene materials, for example, as a modifier for the mechanical properties of polypropylene materials.

The propylene-based copolymer of the present invention has good compatibility with polypropylene materials. The material resulting from blending the propylene-based copolymer of the present invention with the polypropylene material has only one glass transition temperature; and the material resulting from blending has an increased crystallization temperature Tc (obtained by the DSC test), indicating that the incorporation of the propylene-based copolymer of the present invention can promote the crystallization of polypropylene.

### Process for preparing propylene-based copolymers

The present invention provides a process for preparing a propylene-based copolymer, preferably the propylene-based copolymer of the present invention, which process comprises:
(A) pre-contacting a primary catalyst and a cocatalyst to form in situ in a pipeline connected to a polymerization reactor a homogeneous ionic catalyst solution in a solvent; and
(B) sending the homogeneous ionic catalyst solution obtained in step (A) into the polymerization reactor through the pipeline connected to the polymerization reactor to contact with propylene monomer, one or more comonomers, and optionally hydrogen to perform an olefin polymerization to produce the propylene-based copolymer.

According to some embodiments of the present invention, the primary catalyst used in the process of the present invention is a metallocene catalyst. Metallocene catalysts are well known in the art.

According to some embodiments of the present invention, the primary catalyst is at least one of the compounds represented by formula (I); 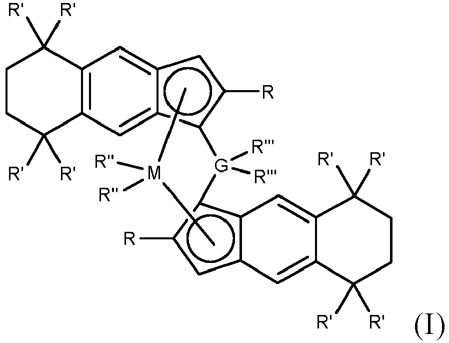
in the formula (I), M is a metal selected from titanium, hafnium, or zirconium; G is carbon, silicon, germanium, tin, or lead; R and R' are each independently selected from hydrogen, and a substituted or unsubstituted C₁-C₂₀ hydrocarbyl; each R" is independently selected from a hydrogen atom, a halogen atom, a C₁-C₂₀ hydrocarbyl group, a C₁-C₂₀ alkoxy group or a C₆-C₂₀ aryloxy group, these groups are straight, branched or cyclic and optionally further substituted with a halogen atom, a C₁-C₁₀ alkyl, a C₁-C₁₀ alkoxy, a C₆-C₁₀ aryl or a C₆-C₁₀ aryloxy; each R‴ is independently selected from a hydrogen atom, a C₁-C₂₀ hydrocarbyl group, a C₁-C₂₀ alkoxy group or a C₆-C₂₀ aryloxy group;
preferably, R and R' are each independently selected from hydrogen, and a substituted or unsubstituted C₁-C₂₀ alkyl; each R" is independently selected from a hydrogen atom, a halogen atom, a C₁-C₁₂ alkyl group, a C₁-C₁₂ alkoxy group or a C₆-C₁₂ aryloxy group, these groups are straight, branched or cyclic and optionally further substituted with a halogen atom, a C₁-C₁₀ alkyl, a C₁-C₁₀ alkoxy, a C₆-C₁₀ aryl or a C₆-C₁₀ aryloxy; each R‴ is independently selected from a hydrogen atom, a C₁-C₁₂ alkyl group, a C₁-C₁₂ alkoxy group or a C₆-C₁₂ aryloxy group;
more preferably, R and R' are each independently selected from hydrogen, and a substituted or unsubstituted C₁-C₁₂ alkyl; each R" is independently selected from a hydrogen atom, a halogen atom, a C₁-C₆ alkyl group, a C₁-C₆ alkoxy group or a C₆-C₁₂ aryloxy group, these groups are straight, branched or cyclic and optionally further substituted with a halogen atom, a C₁-C₆ alkyl, a C₁-C₆ alkoxy, a C₆-C₁₀ aryl or a C₆-C₁₀ aryloxy; each R'" is independently selected from a hydrogen atom, a C₁-C₆ alkyl group, a C₁-C₆ alkoxy group or a C₆-C₁₂ aryloxy group;
further preferably, R and R' are each independently selected from methyl, ethyl, propyl, butyl, pentyl or hexyl; each R" is independently selected from a hydrogen atom, a halogen atom, a C₁-C₃ alkyl group, a C₁-C₃ alkoxy group or a C₆-C₈ aryloxy group, these groups are straight, branched or cyclic and optionally further substituted with a halogen atom, a C₁-C₃ alkyl, a C₁-C₃ alkoxy, a C₆-C₈ aryl or a C₆-C₈ aryloxy; each R‴ is independently selected from a hydrogen atom, a C₁-C₃ alkyl group, a C₁-C₃ alkoxy group or a C₆-C₈ aryloxy group;
still further preferably, R and R' are each independently selected from methyl, isopropyl, or tert-butyl; each R" is independently selected from a hydrogen atom, a halogen atom, methyl, ethyl, or propyl; each R‴ is independently selected from a hydrogen atom, methyl, ethyl or propyl.

In the formula (I), said M is preferably a metal selected from the group consisting of hafnium and zirconium.

In the formula (I), said G is preferably silicon.

In the formula (I), the halogen atom is preferably selected from fluorine, chlorine, bromine, iodine, or a combination thereof, more preferably chlorine.

According to some embodiments of the present invention, the cocatalyst is a boron-containing compound-type cocatalyst, or an aluminoxane-type cocatalyst. Preferably, the cocatalyst is a boron-containing compound-type cocatalyst.

According to some embodiments of the present invention, the boron-containing compound-type cocatalyst contains a structure represented by formula (II);

(Z)₄B⁻ (II)

in formula (II), Z is an optionally substituted phenyl derivative, wherein the optional substituent is a C1-C6 haloalkyl or a halogen group. Boron-containing compound-type cocatalysts including a structure represented by formula (II) are known in the art. Preferably, the boron-containing compound-type cocatalyst is selected from the group consisting of triphenylcarbenium tetrakis(pentafluorophenyl)borate, N,N-dimethylcyclohexylammonium tetrakis(pentafluorophenyl)borate, N,N-dimethylbenzylammonium tetrakis(pentafluorophenyl)borate, N,N-dimethylphenylammonium tetrakis(pentafluorophenyl)borate, and mixtures thereof.

According to some embodiments of the present invention, the cocatalyst can be an aluminoxane-type cocatalyst, for example, an alkyl aluminoxane-type cocatalyst, such as methyl aluminoxane and the like. The aluminoxane-type cocatalyst is preferably a modified alkyl aluminoxane-type cocatalyst soluble in an alkane solvent, for example, a modified methyl aluminoxane (such as Nouryon MMAO-3A and MMAO-7, or customized products soluble in alkane solvents such as hexane and heptane).

According to the present invention, "pre-contacting the primary catalyst and the cocatalyst" can be relatively flexible. According to an embodiment, the primary catalyst and the cocatalyst are pre-contacted in such a manner that a primary catalyst mixed liquid and a cocatalyst mixed liquid are mixed, wherein the primary catalyst mixed liquid is a mixture of the primary catalyst and a solvent, and the cocatalyst mixed liquid is a mixture of the cocatalyst and a solvent; that is, the primary catalyst and the cocatalyst are first mixed with solvent respectively, and then mixed together, for example, at a preset flow rate.

According to the present invention, the expression "to form in situ in a pipeline connected to a polymerization reactor a homogeneous ionic catalyst solution" means that the primary catalyst mixed liquid and the cocatalyst mixed liquid can be directly combined in the pipeline to form the ionic catalyst in the pipeline connected to the polymerization reactor and then enter into the polymerization reactor to initiate the reaction. According to some embodiments, one or both of the primary catalyst mixed liquid and the cocatalyst mixed liquid can be mixed via a mixer and then sent to the pipeline. According to some preferable embodiments of the present invention, the primary catalyst mixed liquid and the cocatalyst mixed liquid are directly combined in the pipeline to form the ionic catalyst in the pipeline connected to the polymerization reactor and then enter into the polymerization reactor to initiate the reaction.

For the homogeneous ionic catalyst solution formed in situ in the pipeline, it means that when observing with naked eyes, the solution is homogeneous without obvious particle precipitation or without particle precipitation, and no solid particles settle after standing for 30 minutes.

According to a preferred embodiment of the present invention, to obtain the propylene-based copolymer of the present application, the length L of the pipeline through which the primary catalyst and the cocatalyst pass from the beginning of the pre-contacting to the entry into the polymerization reactor should be controlled to satisfy the following formula: 30×W/d²≤L≤1000×W/d², where the unit of L is m(meter), W is the total flow rate of the primary catalyst, the co-catalyst and the solvent (usually the sum of the flow rates of the primary catalyst mixed liquid and the cocatalyst mixed liquid) and its unit is kg/h, d is the inner diameter of the pipeline and its unit is mm(millimeter). According to some embodiments, preferably, L satisfies the following formula: 30×W/d²≤L≤900×W/d²; 30×W/d²≤L≤850×W/d²; 30×W/d²≤L≤800×W/d²; 30×W/d²≤L≤750×W/d²; 30×W/d²≤L≤700×W/d²; 30×W/d²≤L≤650×W/d; 30×W/d²≤L≤600×W/d²; 30×W/d²≤L≤550×W/d²; 30×W/d²≤L≤500×W/d²; 30×W/d²≤L≤450×W/d²; 30×W/d²≤L≤400×W/d²; 30×W/d²≤L≤350×W/d²; 30×W/d²≤L≤300×W/d²; 30×W/d²≤L≤250×W/d²; 30×W/d²≤L≤200×W/d²; or 30×W/d²≤L≤150×W/d². According to some embodiments, preferably, L satisfies the following formula: 40×W/d²≤L≤1000×W/d²; 40×W/d²≤L≤900×W/d²; 40×W/d²≤L≤850×W/d²; 40×W/d²≤L≤800×W/d²; 40×W/d²≤L≤750×W/d²; 40×W/d²≤L≤700×W/d²; 40×W/d²≤L≤650×W/d²; 40×W/d²≤L≤600×W/d²; 40×W/d²≤L≤550×W/d²; 40×W/d²≤L≤500×W/d²; 40×W/d²≤L≤450×W/d²; 40×W/d²≤L≤400×W/d²; 40×W/d²≤L≤350×W/d²; 40×W/d²≤L≤300×W/d²; 40×W/d²≤L≤250×W/d²; 40×W/d²≤L≤200×W/d²; or 40×W/d²≤L≤150×W/d². According to some embodiments, preferably, L satisfies the following formula: 50×W/d²≤L≤1000×W/d²; 50×W/d²≤L≤900×W/d²; 50×W/d²≤L≤850×W/d²; 50×W/d²≤L≤800×W/d²; 50×W/d²≤L≤750×W/d²; 50×W/d²≤L≤700×W/d²; 50×W/d²≤L≤650×W/d²; 50×W/d²≤L≤600×W/d²; 50×W/d²≤L≤550×W/d²_{;} 50×W/d²≤L≤500×W/d²_{;} 50×W/d²≤L≤450×W/d²; 50×W/d²≤L≤400×W/d²; 50×W/d²≤L≤350×W/d²; 50×W/d²≤L≤300×W/d²; 50×W/d²≤L≤250×W/d²; 50×W/d²≤L≤200×W/d²; or 50×W/d²≤L≤150×W/d². More preferably, L can satisfy the following formula: 40×W/d²≤L≤900×W/d²; more preferably, L can satisfy the following formula: 50×W/d²≤L≤800×W/d². Specifically, L can be equal to 30×W/d², 35×W/d², 40×W/d², 45×W/d², 50×W/d², 60×W/d², 70×W/d², 80×W/d², 90×W/d², 100×W/d², 150×W/d², 200×W/d², 250×W/d² , 300×W/d², 350×W/d², 400×W/d² , 450×W/d², 500×W/d², 550×W/d² , 600×W/d², 650×W/d², 700×W/d², 750×W/d², 800×W/d², 850×W/d², 900×W/d², 950×W/d² or 1000×W/d², or L can be in any range defined between any two aforementioned values, where the unit of L is m, and W is the total flow rate of the primary catalyst, the cocatalyst and solvent and its unit is kg/h, and d is the inner diameter of the pipeline and its unit is mm. The inventors of the present application have surprisingly found that when above condition is met, the primary catalyst and the cocatalyst can pre-contact well, and a homogeneous ionic catalyst solution with more excellent catalytic performance can be obtained. After the entry of the resulting homogeneous ionic catalyst solution into the reactor, the propylene-based copolymer of the present application, especially the propylene-based copolymer having the advantageous properties defined in the present application (especially the comonomer dispersion degree) can be prepared.

In the present invention, when the flow rates of the primary catalyst mixed liquid and the cocatalyst mixed liquid are based on the volume flow rates, the volume flow rates can be converted into the mass flow rates by using the density of the solvent. For example, the density of n-hexane is 0.66g/cm³. When n-hexane is used as the solvent to obtain the primary catalyst mixed liquid and the cocatalyst mixed liquid, the volume flow rates can be converted into the mass flow rates by using the density of n-hexane for use in above formula.

According to embodiments of the present invention, the solvent used for the pre-contacting is preferably at least one of C₄-C₂₀ straight, branched, or cyclic aliphatic hydrocarbons; specifically, preferably at least one of n-butane, isobutane, n-pentane, isopentane, n-hexane, isohexane, n-heptane, isoheptane, n-octane, isooctane, cyclopentane and cyclohexane; more preferably at least one of n-butane, isobutane, n-pentane, isopentane, n-hexane, isohexane, cyclopentane and cyclohexane; further preferably at least one of n-pentane, isopentane, n-hexane, isohexane and cyclohexane; still further preferably n-hexane.

According to some embodiments of the present invention, the primary catalyst in the present application can be mixed with a solvent to obtain a primary catalyst mixed liquid. Said solvent is at least one of C₄-C₂₀ straight, branched or cyclic aliphatic hydrocarbons; preferably at least one of n-butane, isobutane, n-pentane, isopentane, n-hexane, isohexane, n-heptane, isoheptane, n-octane, isooctane, cyclopentane, and cyclohexane; more preferably at least one of n-butane, isobutane, n-pentane, isopentane, n-hexane, isohexane, cyclopentane, and cyclohexane; further preferably at least one of n-pentane, isopentane, n-hexane, isohexane and cyclohexane; still further preferably n-hexane.

The concentration of the primary catalyst mixed liquid can be appropriately determined by those skilled in the art. For example, the concentration of the primary catalyst mixed liquid can be 0.001 µmol/mL to 1000 µmol/mL, preferably 0.01 µmol/mL to 100 µmol/mL. For example, the concentration of the primary catalyst mixed liquid can be 0.1 µmol/mL.

According to some embodiments of the present invention, the cocatalyst in the present application can be mixed with a solvent to obtain a cocatalyst mixed liquid. Said solvent is at least one of C₄-C₂₀ straight, branched or cyclic aliphatic hydrocarbons; preferably at least one of n-butane, isobutane, n-pentane, isopentane, n-hexane, isohexane, n-heptane, isoheptane, n-octane, isooctane, cyclopentane, and cyclohexane; more preferably at least one of n-butane, isobutane, n-pentane, isopentane, n-hexane, isohexane, cyclopentane, and cyclohexane; further preferably at least one of n-pentane, isopentane, n-hexane, isohexane and cyclohexane; still further preferably n-hexane.

The concentration of the cocatalyst mixed liquid can be appropriately determined by those skilled in the art. For example, the concentration of the cocatalyst mixed liquid can be 0.001 µmol/mL to 1000 µmol/mL, preferably 0.01 µmol/mL to 100 µmol/mL. For example, the concentration of the cocatalyst mixed liquid can be 0.15 µmol/mL.

According to some embodiments of the present application, the solvent of the primary catalyst mixed liquid is identical to that of the cocatalyst mixed liquid. Preferably, the solvent of the primary catalyst mixed liquid is identical to that of the cocatalyst mixed liquid, and said solvent is at least one of C₄-C₂₀ straight, branched, or cyclic aliphatic hydrocarbons; preferably at least one of n-butane, isobutane, n-pentane, isopentane, n-hexane, isohexane, n-heptane, isoheptane, n-octane, isooctane, cyclopentane, and cyclohexane; more preferably at least one of n-butane, isobutane, n-pentane, isopentane, n-hexane, isohexane, cyclopentane, and cyclohexane; further preferably at least one of n-pentane, isopentane, n-hexane, isohexane, and cyclohexane; still further preferably n-hexane.

According to a preferable embodiment of the present invention, the process for preparing the propylene-based copolymer of the present invention comprises:
(A) pre-contacting a primary catalyst mixed liquid and a cocatalyst mixed liquid in a pipeline connected to a polymerization reactor to form in situ a homogeneous ionic catalyst solution in a solvent; and
(B) sending the homogeneous ionic catalyst solution obtained in step (A) into the polymerization reactor through the pipeline connected to the polymerization reactor to contact with propylene monomer, one or more comonomers, and optionally hydrogen to perform an olefin polymerization to produce the propylene-based copolymer.

The preparation process of the present invention can further include preparing the primary catalyst mixed liquid and the cocatalyst mixed liquid before step (A). According to some embodiments, preparing the primary catalyst mixed liquid includes mixing the primary catalyst with a solvent, optionally under stirring. According to some embodiments, preparing the cocatalyst mixed liquid includes mixing the cocatalyst with a solvent, optionally under stirring. The stirring can be performed with various stirring equipments known in the art.

In the prior art, in order to improve the solubility of catalysts, especially metallocene catalysts with bis-indenyl ligands, it is generally necessary to use aromatic solvents such as toluene. However, aromatic solvents have high boiling points, leading to difficulty in the removal from polymers. If an aromatic solvent is introduced during a polymerization process, such as a solution polymerization process, the resultant polymer will contain aromatic substances. The presence of aromatic substances in polymers has a negative impact on the application of the polymer, for example, it cannot be used in food and medical fields.

According to some embodiments of the present invention, aromatic hydrocarbon compounds are not used in the preparation process of propylene-based copolymer of the present invention. For example, the use of aromatic solvents is avoided by using aliphatic solvents in the process of the present invention. Therefore, the weight content of aromatic hydrocarbon compounds in the propylene-based copolymer obtained by the preparation process of the present invention, e.g., in the propylene-based copolymer of the present invention, is less than 500 ppm, preferably less than 300 ppm, more preferably less than 200 ppm or less than 100 ppm, more preferably less than 50 ppm, most preferably no aromatic hydrocarbon compounds are present. The expression "aromatic hydrocarbon compounds are not used" means that aromatic hydrocarbon compounds are not intentionally used in the process of the present invention. According to some embodiments, the aromatic hydrocarbon compounds include those known in the art, such as benzene, toluene, o-xylene, m-xylene, p-xylene, ethylbenzene, halogenated derivatives thereof, and mixtures thereof.

In the process of the present invention, the used amounts of the cocatalyst and the primary catalyst can be those conventionally used in the art. Those skilled in the art can select the used amounts of the cocatalyst and the primary catalyst. Preferably, the molar ratio of the cocatalyst to the central metal atom M in the primary catalyst is 0.5:1-5:1, preferably 1:1-2:1.

According to the present invention, in some embodiments, an alkyl aluminum can be added to the olefin polymerization system. The timing of adding the alkyl aluminum can be relatively flexible, and can be added to a pipeline or a polymerization reactor; preferably, added to a pipeline. According to some embodiments, the aluminum alkyl is added after the beginning of the pre-contacting. According to some preferred embodiments, the alkyl aluminum is added downstream of the pre-contacting point (i.e., at a site closer to the polymerization reactor) into the pre-contacting pipeline connected to the polymerization reactor.

Alkyl aluminum used in the present invention can be those conventionally used in the art. According to some embodiments, the alkyl aluminum can have a structure shown in formula (III);

AlR₃ (III)

In formula (III), R is C₁-C₁₂ hydrocarbyl, preferably C₁-C₁₂ alkyl, more preferably C₁-C₈ alkyl.

More specifically, the alkyl aluminum can be at least one of trimethyl aluminum, triethyl aluminum, triisobutyl aluminum, and triisooctyl aluminum.

According to some embodiments of the present invention, the alkyl aluminum is added in the form of an alkyl aluminum solution. According to some preferred embodiments, the solvent of the alkyl aluminum solution is a C₄-C₂₀ straight, branched, or cyclic aliphatic hydrocarbon; preferably, the solvent of the alkyl aluminum solution is identical to that used for the pre-contacting (i.e. the solvent used to prepare the primary catalyst mixed liquid and the cocatalyst mixed liquid). The concentration of the alkyl aluminum solution can vary within a wide range and can be appropriately selected by those skilled in the art; for example, it can be 1-20 mol/L.

According to some embodiments, both the boron-containing compound-type cocatalyst and the alkyl aluminum are used in the process of the present invention.

The forms of olefin polymerization in the present invention can be a bulk homogeneous polymerization, a supercritical polymerization, a solution polymerization, or a near-critical dispersion polymerization. These polymerization forms are known in the art.

According to a preferred embodiment, the polymerization process of the present invention is solution polymerization.

For the solution polymerization, it is necessarily carried out in the presence of at least one polymerization solvent. According to some embodiments, the polymerization solvent can be a C₃-C₁₀ alkane and/or a monocyclic aromatic hydrocarbon; preferably a C₃-C₁₀ alkane. The C₃-C₁₀ alkane is preferably at least one of propane, n-butane, isobutane, n-pentane, isopentane, n-hexane, isohexane, n-heptane, isoheptane, n-octane, isooctane, cyclopentane and cyclohexane; and the monocyclic aromatic hydrocarbon is preferably toluene and/or xylene. Preferably, the polymerization solvent is at least one or more of n-butane, isobutane, n-pentane, isopentane, n-hexane, isohexane, cyclopentane, and cyclohexane; further preferably at least one of n-pentane, isopentane, n-hexane, isohexane, and cyclohexane; still further preferably n-hexane.

According to some preferred embodiments, the polymerization method of the present invention is a solution polymerization, wherein the solvent used in the solution polymerization is identical to the solvent used to prepare the primary catalyst mixed liquid and/or the cocatalyst mixed liquid. According to some preferred embodiments, the solvent used in the solution polymerization, the solvent used to prepare the primary catalyst mixed liquid and the solvent used to prepare the cocatalyst mixed liquid are all identical; preferably, said solvent is at least one of C₄-C₂₀ straight, branched or cyclic aliphatic hydrocarbons; preferably at least one of n-butane, isobutane, n-pentane, isopentane, n-hexane, isohexane, n-heptane, isoheptane, n-octane, isooctane, cyclopentane and cyclohexane; more preferably at least one of n-butane, isobutane, n-pentane, isopentane, n-hexane, isohexane, cyclopentane and cyclohexane; further preferably at least one of n-pentane, isopentane, n-hexane, isohexane, and cyclohexane; still further preferably n-hexane.

According to a preferred embodiment of the present invention, the solvent used in the solution polymerization in the present invention is identical to the solvent used for the pre-contacting. According to a preferred embodiment of the present invention, when an alkyl aluminum is used, the solvent of the alkyl aluminum solution, the solvent used in the solution polymerization, and the solvent used in the pre-contacting are all identical.

The polymerization of the present invention can be either a continuous or semi-continuous operation or a batch operation. These operation modes are known in the art. The polymerization of the present invention is preferably a continuous polymerization.

The olefin polymerization of the present invention can use conventional process conditions in the art. Those skilled in the art can select appropriate polymerization conditions according to the used polymerization process, and these polymerization conditions are known in the art.

According to some embodiments, the polymerization temperature of the olefin polymerization in the present invention is 60-150°C, and the polymerization pressure is 0.1-10 MPa.

In the preparation process of the present invention, when the polymerization is completed, the polymerization can be terminated and post-treated to obtain the polymer. The termination and post-treatment of the polymerization reaction are known in the art.

### Composition containing the propylene-based copolymer

The present invention provides a polymer composition comprising a propylene-based copolymer of the present invention; preferably the polymer composition comprises a propylene-based copolymer of the present invention and at least one additional polymer. The additional polymer is different from the propylene-based copolymer of the present invention.

According to some embodiments of the present invention, the polymer composition is a polypropylene composition and includes the propylene-based copolymer of the present invention and a polypropylene. The polypropylene includes a polypropylene homopolymer, a polypropylene copolymer different from the propylene-based copolymer of the present invention, or a combination thereof.

According to some embodiments of the present invention, the present invention provides a polypropylene composition, wherein the polypropylene composition contains:
(1) 30-99.5wt% of the propylene-based copolymer of the present invention (a first polymer component); and
(2) 0.5-70 wt% of a second polymer component (a polypropylene), the second polymer component contains 95-100wt% of propylene-derived structural units and 0-5wt% of comonomer-derived structural units;
the optional comonomer(s) in the second polymer component is/are each independently selected from at least one of ethylene and C₄-C₂₀ alpha-olefins.

According to some embodiments, the polypropylene composition has an initial melting temperature of 80°C or higher, preferably 90°C or higher; and a melting enthalpy of lower than 50 J/g, preferably lower than 40 J/g.

Both the initial melting temperature and the melting enthalpy are determined by DSC.

In the present invention, the content of the propylene-based copolymer of the present invention and the content of the second polymer component in the polypropylene composition are calculated based on the total weight of the polypropylene composition.

According to a preferred embodiment of the present invention, in the polypropylene composition, the content of the propylene-based copolymer of the present invention is 50-99wt%, and the content of the second polymer component is 1-50wt%; preferably, the content of the propylene-based copolymer of the present invention is 60-95wt%, and the content of the second polymer component is 5-40wt%.

According to the present invention, preferably, in the polypropylene composition, the second polymer component preferably satisfies a certain comonomer dispersion degree. Specifically, the dispersion degree of the comonomer-derived structural units contained in the second polymer component in the propylene segment D_{[PCP]/[C]} is in the range of 50% to 75 %; for example, 55 %, 60%, 65%, 70 %; wherein the dispersion degree D_{[PCP]/[C]} is as defined above. In the present invention, according to some preferred embodiments, the second polymer component can be produced by the polymerization method of the present invention.

According to the present invention, one or both of the propylene-based copolymer of the present invention and the second polymer component also has/have at least one of the following characteristics:
the mmm tacticity is in the range of 75-99%, preferably 80%-97%;
the tacticity index m/r is 3-20.

The polypropylene composition of the present invention has a relatively low glass transition temperature. According to some embodiments of the present invention, the polypropylene composition of the present invention has a glass transition temperature of -29°C or lower, preferably - 30°C or lower. The glass transition temperature can be determined by DSC.

Although the polypropylene composition of the present invention contains said two polymer components, the polypropylene composition has only one melting peak in the DSC curve. The polypropylene composition of the present invention can be characterized by its melting point (Tm). The melting point can be determined by differential scanning calorimetry (DSC).

The general procedure of DSC is as follows: 10 mg of a sample is placed in a crucible and measured on a differential scanning calorimeter (for example METTLER DSC1). Under a nitrogen atmosphere, the temperature is raised from -70°C to 200°C at a heating rate of 10°C/minute, maintained for 1 minute, reduced to -70°C at a rate of 10°C/minute, maintained for 3 minutes, and then raised to 200°C at a rate of 10°C/minute. The second temperature rising scan data is recorded. For the purposes of this application, the maximum value of the highest temperature peak is deemed as the melting point of the polymer. A "peak" in this application is defined as the change from positive to negative in the overall slope of the DSC curve (heat flow vs. temperature), forming a maximum value without shifting relative to the baseline, where the DSC curve is plotted such that a positive peak will be displayed at the end of the exothermic reaction.

The melting point Tm (measured by DSC) of the polypropylene composition can be higher than 100°C and lower than 140°C, preferably lower than 130°C, more preferably lower than 120°C.

The polypropylene composition of the present invention can be characterized by its melting enthalpy (ΔHm). The melting enthalpy can be determined by DSC. The polypropylene composition of the present invention has a melting enthalpy of 0.5-50J/g, preferably 5-40J/g, more preferably 10-30J/g, most preferably 15-25J/g.

The crystallinity of the polypropylene composition of the present invention can be determined by dividing the ΔHm of a sample by the ΔHm of the 100% crystalline polymer. For isotactic polypropylene, ΔHm for 100% crystalline polymer is assumed to be 189J/g. The polypropylene composition of the present invention can have a crystallinity of less than 20%, preferably less than 15%, and more preferably 5-12%.

The polypropylene composition of the present invention has a density of preferably 0.84-0.92 g/cc, more preferably 0.86-0.89 g/cc, measured at room temperature by the test method ASTMD-1505.

The polypropylene composition of the present invention can have a melt flow rate (MFR) under a load of 2.16kg and at 190°C of lower than or equal to 100g/10min, preferably lower than or equal to 20g/10min; and it is measured by the test method ASTM D-1238.

According to the present invention, the polypropylene composition can be obtained by mixing in melting form or in solution form the propylene-based copolymer of the present invention and the second polymer component. These mixing modes are known in the art and can be selected and used in a suitable manner by those skilled in the art.

The polypropylene composition of the present invention has a high comonomer content and a relatively high initial melting temperature, and therefore the adhesion and agglomeration problems during storage and transportation can be avoided.

The blending of the propylene composition of the present invention with a polypropylene will promote the crystallization of the polypropylene. Therefore, in a polypropylene material including the polypropylene and the polypropylene composition, the polypropylene composition can serve as a polypropylene crystallization promotor. Furthermore, it can improve the mechanical properties of the polypropylene material. Therefore, the polypropylene composition can also be used as a modifier for polypropylene material, and specifically as a modifier for mechanical properties of polypropylene material.

The present invention also provides the use of the polypropylene composition in preparing a polypropylene material, the polypropylene material comprises a polypropylene and the polypropylene composition.

The present invention also provides a polypropylene material comprising a polypropylene and the above-mentioned polypropylene composition.

The polypropylene composition and/or polypropylene material of the present invention can contain additives known in the art, such as fillers, antioxidants, surfactants, plasticizers, anti-blocking agents, pigments, dyes, processing aids, UV stabilizers, lubricants, waxes, nucleating agents, and the like. The additive can be present in a typical effective amount known in the art, such as 0.001 wt% to 10wt%. Those skilled in the art can select and use these additives in a suitable manner.

### Examples

The present invention will be further described below with reference to examples, but the scope of the present invention is not limited to these examples.

In the following examples, the involved evaluation and test methods are as follows:
1. Melt flow rate (190°C/2.16kg) was measured according to the method ASTM-D 1238.
2. Ethylene monomer structural unit content in propylene-based copolymer: it was measured on infrared spectrophotometer Perkin Elmer PE1760 as follows: the propylene-based copolymer was pressed into a thin, uniform film at a temperature of approximately 150°C or higher, and then fixed on the infrared spectrophotometer. The complete spectra of the sample from 600cm⁻¹ to 4000cm⁻¹ were recorded, and the weight percent of the ethylene monomer structural unit could be calculated according to the following equation: Ethylene wt%=82.585-111.987x+30.045x², where x is the ratio of the peak height at 1155cm⁻¹ to the peak height at 722 cm⁻¹ or 732 cm⁻¹ (whichever is higher).
3. Ethylene dispersion degree: D_{[PEP]/[E]}=[PEP]/[E]×100%, wherein [PEP] is the amount of monodispersed ethylene monomer structural units in the propylene-ethylene copolymer, wherein the monodispersed ethylene monomer structural unit is an ethylene monomer structural unit that exists in the form of a single ethylene monomer structural unit inserted into the propylene segment, and [E] is the total amount of ethylene monomer structural units in the propylene-based copolymer; the total amount of ethylene monomer structural units [E] and the amount of monodispersed ethylene monomer structural units [PEP] were measured by ¹³C NMR.
4. Density was measured at room temperature according to the method ASTM-D792.
5. Hydrogen and carbon nuclear magnetic spectra were obtained with a Bruker-300 nuclear magnetic resonance instrument at 110°C by using deuterated chloroform as the solvent.
6. mmm tacticity was measured by ¹³C NMR; See the method disclosed in the U.S. patent US7232871.
7. Tacticity index m/r was measured by ¹³C NMR; see the description in H.N. Cheng, Macromolecules, Vol. 17, pp. 1950-1955 (1984) for detailed method.
8. Melting point was determined by differential scanning calorimetry (DSC). The general procedure of DSC was as follows: 10 mg of a sample was placed in a crucible and measured on a differential scanning calorimeter METTLER DSC 1. Under a nitrogen atmosphere, the temperature was raised from -70°C to 200°C at a heating rate of 10°C/minute, maintained for 1 minute, reduced to -70°C at a rate of 10 °C/min, maintained for 3 minutes, and then raised to 200°C at a rate of 10°C/minute. The second temperature rising scan data was recorded. The maximum value of the highest temperature peaks was deemed as the melting point of the polymer.
9. Polymerization activity: The polymer obtained by polymerization was weighed after drying, and divided by the amount of the catalyst added during polymerization to obtain the catalyst activity.
10. The melting enthalpy was determined by DSC as described above.

### Examples A1-A4

A polymerization reaction was carried out continuously in a 1.8L polymerization kettle. The polymerization kettle was equipped with a mechanical stirrer. The temperature of the polymerization kettle can be adjusted by controlling the jacket temperature via an oil bath. The temperature inside the reactor was set to 90°C. The polymerization kettle was connected with a propylene pipeline, an ethylene pipeline, an n-hexane pipeline and a catalyst injection pipeline. Solvent and monomer feeds to the reactor were measured by mass-flow controllers. A hydrogen feed was incorporated into the ethylene pipeline after passing through the mass-flow controller. The flow rate and pressure of materials were controlled with variable-speed diaphragm pumps.

Dimethylsilyl bis(5,6,7,8-tetrahydro-2,5,5,8,8-pentamethylbenzindenyl)dimethylhafnium was used as primary catalyst. See the U.S. patent US60/586465 for its synthesis method. The primary catalyst was mixed with n-hexane solvent, and the concentration of the obtained primary catalyst mixed liquid was 0.1 µmol/mL. The boron-containing compound was a commercially-available compound, triphenylcarbenium tetrakis(pentafluorophenyl)borate, and mixed with n-hexane solvent. The concentration of the resulting boron-containing compound mixed liquid was 0.15 µmol/mL. The primary catalyst mixed liquid, the boron-containing compound mixed liquid and a triisobutyl aluminum solution (a solution in n-hexane having a concentration of 1 mmol/mL) were metered using pumps and mass-flow meters. The primary catalyst mixed liquid and the boron-containing compound mixed liquid were combined in a pipeline, and then entered into the reactor through the pipeline having a length of 0.2 meters and an inner diameter(diameter) of 4.5 mm. The triisobutylaluminum solution was subsequently added to the pipeline at a distance of 0.1 meters away from the reactor.

The reactor was operated at 30 bar under stirring. A discharge pipeline was provided at the bottom of the polymerization kettle. Water was added to the discharge pipeline along with a stabilizer tri(2,4-ditert-butylphenyl) phosphite to terminate the polymerization reaction. The product material was then heated through a heat exchanger and then sent into a devolatilization device. Polymer pellets were obtained by using an extruder and an underwater pelletizer.

Specific process conditions and results were shown in Table A1.

**Table A1**

| | Example A1 | Example A2 | Example A3 | Example A4 |
|---|---|---|---|---|
| propylene flow rate (g/h) | 380 | 360 | 380 | 320 |
| ethylene flow rate (g/h) | 20 | 40 | 60 | 80 |
| n-hexane flow rate (g/h) | 660 | 660 | 600 | 600 |
| hydrogen flow rate (mL/min) | 3 | 3 | 1 | 1 |
| primary catalyst mixed liquid flow rate (mL/h) | 60 | 60 | 50 | 50 |
| boron-containing compound mixed liquid flow rate (mL/h) | 50 | 60 | 40 | 40 |
| triisobutyl aluminum solution flow rate (mL/h) | 50 | 50 | 50 | 50 |
| | | | | |
| ethylene content (wt%) | 7.44 | 13.69 | 15.98 | 24.16 |
| ethylene dispersion degree (%) | 64 | 61 | 68 | 62 |
| MFR (g/10min) @ 190°C | 7.34 | 7.06 | 2.97 | 3.43 |
| density (g/cc) | 0.884 | 0.875 | 0.866 | 0.857 |
| mmm tacticity (%) | 91.7 | 90.4 | 93.0 | 90.5 |
| tacticity index m/r | 11.0 | 9.4 | 13.3 | 9.5 |

### Examples A5-A6

The polymerization procedure of Example A1 was used except that the primary catalyst mixed liquid and the cocatalyst mixed liquid were metered using pumps and mass-flow meters; they were combined in a pipeline, and then entered into the reactor through the pipeline having a length of 2 meters and an inner diameter (diameter) of 4.5 mm.

Specific process conditions and results were shown in Table A2.

**Table A2**

| | Example A5 | Example A6 |
|---|---|---|
| propylene flow rate (g/h) | 390 | 390 |
| ethylene flow rate (g/h) | 40 | 60 |
| n-hexane flow rate (g/h) | 600 | 600 |
| hydrogen flow rate (mL/min) | 1 | 1 |
| primary catalyst mixed liquid flow rate (mL/h) | 50 | 50 |
| boron-containing compound mixed liquid flow rate (mL/h) | 30 | 30 |
| triisobutyl aluminum solution flow rate (mL/h) | 50 | 50 |
| | | |
| ethylene content (wt%) | 9.21 | 16.6 |
| ethylene dispersion degree (%) | 65 | 59 |
| MFR (g/10min) @190°C | 4.2 | 3.9 |
| density (g/cc) | 0.875 | 0.867 |
| mmm tacticity (%) | 92.0 | 89.1 |
| tacticity index m/r | 11.5 | 8.2 |

### Examples A7-A9

The polymerization procedure of Example A1 was used except that the primary catalyst was dimethylsilyl bis(5,6,7,8-tetrahydro-2,5,5,8,8-pentamethylbenzindenyl)zirconium dichloride, the synthesis method of which could be found in U.S. patent US60/586465. The cocatalyst was MMAO-3A purchased from Nouryon Company. The primary catalyst mixed liquid and the cocatalyst mixed liquid were metered using pumps and mass-flow meters; they were combined in a pipeline, and then entered into the reactor through the pipeline having a length of 0.5 meters and an inner diameter (diameter) of 4.5 mm.

Specific process conditions and results were shown in Table A3.

**Table A3**

| | Example A7 | Example A8 | Example A9 |
|---|---|---|---|
| propylene flow rate (g/h) | 390 | 390 | 390 |
| ethylene flow rate (g/h) | 40 | 40 | 60 |
| n-hexane flow rate (g/h) | 600 | 600 | 600 |
| hydrogen flow rate (mL/min) | 1 | 2 | 1 |
| primary catalyst mixed liquid flow rate (mL/h) | 50 | 50 | 50 |
| cocatalyst mixed liquid flow rate (mL/h) | 50 | 50 | 50 |
| | | | |
| ethylene content (wt%) | 7.8 | 8.5 | 12.3 |
| ethylene dispersion degree (%) | 55 | 57 | 53 |
| MFR (g/10min) @190°C | 17.1 | 48 | 15.2 |
| density (g/cc) | 0.878 | 0.877 | 0.869 |
| mmm tacticity (%) | 87.6 | 88.5 | 87.3 |
| tacticity index m/r | 7.1 | 7.7 | 6.9 |

### Test Example A

The propylene-based copolymers of Examples A1-A9 were incorporated into a homopolymerized polypropylene (PP; PPH-M16 from Sinopec) for blending test. The weight ratio of the propylene-based copolymer to PP was 13:87. The dynamic mechanical analysis curve (DMA curve) of the blend was measured using an RSA III DMA dynamic thermomechanical analyzer. The glass transition temperature (Tg) of the blend is the temperature of tan delta peak. A solid-state test was performed in dynamic mode using a torsion clamp in a liquid nitrogen environment. A heating rate of 3°C/min, a frequency of 1 rad/sec, and an initial strain of 0.1% were used. The average sample size was 45.0mm*12.6mm*3.2mm. The compatibility of the propylene-based copolymer and the PP material can be reflected by the Tg peak in the DMA curve. Each material obtained after blending had only one glass transition temperature peak in the DMA curve, and the crystallization temperature Tc (obtained by the DSC test) of the PP material is increased, indicating that the incorporation of the propylene-based copolymer of the present invention can promote the crystallization of PP.

Figure A1 shows the dynamic mechanical analysis curves of the polypropylene material before and after incorporating the propylene-based copolymer of Example A4 of the present invention, wherein the curve with a lower peak temperature represented the polypropylene material after incorporating the sample of Example A4. It could be seen from Figure A1 that the material obtained after blending the propylene-based copolymer of the present invention with PP had only one glass transition temperature peak.

Figure A2 shows the dynamic mechanical analysis curves of the polypropylene material before and after incorporating the propylene-based copolymer of Example A6 of the present invention, wherein the curve with a lower peak temperature represented the polypropylene material after incorporating the sample of Example A6. It could be seen from Figure A2 that the material obtained after blending the propylene-based copolymer of the present invention with PP had only one glass transition temperature peak.

Figure A3 shows the crystallization temperatures of the polypropylene compositions into which were incorporated the propylene-based copolymers of Examples A1-A4 and the propylene-based copolymers of Comparative Examples B2 and B3, wherein the weight ratio of the propylene-based copolymer to the polypropylene was 13:87. It could be seen from Figure A3 that after the incorporation of the propylene-based copolymer of the present invention, the crystallization temperature Tc (obtained by the DSC test) of the polypropylene composition is increased, indicating that the incorporation of the propylene-based copolymer of the present invention could promote the crystallization of polypropylene. For Comparative Examples B2 and B3, after blending with the polypropylene at the weight ratio of 13:87, the crystallization temperatures of the polypropylene composition were 117.9°C and 117.8°C.

### Examples B1-B4

### Polymerization procedure

A continuous polymerization reaction was carried out in a 1.8L polymerization kettle. The polymerization kettle was equipped with a mechanical stirrer. The temperature of the polymerization kettle can be adjusted by controlling the jacket temperature via an oil bath. The polymerization kettle was connected with a propylene pipeline, an ethylene pipeline, a n-hexane pipeline and a catalyst injection pipeline. Solvent and monomer feeds to the reactor were measured by mass-flow controllers. The flow rate and pressure of materials were controlled with variable-speed diaphragm pumps. A hydrogen feed was incorporated into the ethylene pipeline after passing through the mass-flow controller.

The primary catalyst was dimethylsilyl bis(5,6,7,8-tetrahydro-2,5,5,8,8-pentamethylbenzindenyl)dimethylhafnium. See U.S. patent US60/586465 for its synthesis method. The primary catalyst was mixed with the n-hexane solvent, and the concentration of the obtained primary catalyst mixed liquid was 0.1 µmol/mL. The boron-containing compound was a commercially-available compound, triphenylcarbenium tetrakis(pentafluorophenyl)borate, which was mixed with the n-hexane solvent. The concentration of the resulting boron-containing compound mixed liquid was 0.15 µmol/mL. The primary catalyst mixed liquid, the boron-containing compound mixed liquid and a triisobutyl aluminum solution (a solution in n-hexane having a concentration of 1 mmol/mL) were metered using pumps and mass-flow meters. The primary catalyst mixed liquid and the boron-containing compound mixed liquid were combined in a pipeline, and then entered into the polymerization kettle through the pipeline having a length of 0.2 meters and an inner diameter (diameter) of 4.5 mm. The triisobutylaluminum solution was subsequently added. The reactor was operated under stirring. A discharge pipeline was provided at the bottom of the polymerization kettle. Water was added to the discharge pipeline along with tri(2,4-ditert-butylphenyl) phosphite to terminate the polymerization reaction. The product material was then heated through a heat exchanger and then sent into a devolatilization device. Polymer pellets were obtained by using an extruder and an underwater pelletizer.

Specific process conditions and results were shown in Table B 1.

**Table B 1**

| | Example B1 | Example B2 | Example B3 | Example B4 |
|---|---|---|---|---|
| temperature (°C) | 70 | 90 | 120 | 90 |
| pressure (bar) | 30 | 25 | 25 | 30 |
| propylene flow rate (g/h) | 400 | 400 | 380 | 400 |
| ethylene flow rate (g/h) | 30 | 40 | 60 | 70 |
| n-hexane flow rate (g/h) | 600 | 600 | 600 | 600 |
| hydrogen flow rate (mL/min) | 2 | 2 | 3 | 1 |
| primary catalyst mixed liquid flow rate (mL/h) | 50 | 50 | 30 | 30 |
| boron-containing compound mixed liquid flow rate (mL/h) | 35 | 60 | 30 | 25 |
| triisobutyl aluminum solution flow rate (mL/h) | 25 | 50 | 50 | 50 |
| site for adding the triisobutyl aluminum solution | directly entered into the reactor | 0.1m away from the reactor | directly entered into the reactor | 0.1m away from the reactor |
| catalyst polymerization activity (g polymer/mol catalyst) | 5.72×10⁷ | 7.68×10⁷ | 4.31×10⁷ | 5.88×10⁷ |
| | | | | |
| ethylene content (wt%) | 8.63 | 11.69 | 16.16 | 18.24 |
| ethylene dispersion degree (%) | 61 | 64 | 69 | 65 |
| MFR (g/10min) @190°C | 7.5 | 8.8 | 17.5 | 3.3 |
| density (g/cc) | 0.880 | 0.877 | 0.866 | 0.865 |

### Examples B5-B7

The polymerization procedure of Example B 1 was used except that the primary catalyst mixed liquid and the cocatalyst mixed liquid were metered using pumps and mass-flow meters; they were combined in a pipeline, and then entered into the reactor through the pipeline having a length of 1 meter and an inner diameter (diameter) of 4.5 mm.

Specific process conditions and results were shown in Table B2.

**Table B2**

| | Example B5 | Example B6 | Example B7 |
|---|---|---|---|
| temperature (°C) | 85 | 85 | 105 |
| pressure (bar) | 30 | 30 | 25 |
| propylene flow rate (g/h) | 390 | 390 | 390 |
| ethylene flow rate (g/h) | 40 | 20 | 20 |
| n-hexane flow rate (g/h) | 600 | 600 | 600 |
| hydrogen flow rate (mL/min) | 1 | 1 | 1 |
| primary catalyst mixed liquid flow rate (mL/h) | 50 | 50 | 50 |
| boron-containing compound mixed liquid flow rate (mL/h) | 30 | 60 | 30 |
| triisobutyl aluminum solution flow rate (mL/h) | 50 | 50 | 50 |
| site for adding the triisobutyl aluminum solution | 0.25m away from the reactor | 0.25m away from the reactor | 0.25m away from the reactor |
| catalyst polymerization activity (g polymer/mol catalyst) | 1.33×10⁷ | 7.35×10⁶ | 1.01×10⁷ |
| | | | |
| ethylene content (wt%) | 9.77 | 5.32 | 5.96 |
| ethylene dispersion degree (%) | 66 | 68 | 65 |
| MFR (g/10min) @190°C | 3.5 | 2.3 | 25 |
| density (g/cc) | 0.878 | 0.883 | 0.882 |

### Examples B8-B10

The polymerization procedure of Example B 1 was used except that the primary catalyst mixed liquid and the cocatalyst mixed liquid were metered using pumps and mass-flow meters; they were combined in a pipeline, and then entered into the reactor through the pipeline having a length of 2 meters and an inner diameter (diameter) of 4.5 mm.

Specific process conditions and results were shown in Table B3.

**Table B3**

| | Example B8 | Example B9 | Example B10 |
|---|---|---|---|
| temperature (°C) | 90 | 90 | 90 |
| pressure (bar) | 30 | 30 | 30 |
| propylene flow rate (g/h) | 390 | 390 | 390 |
| ethylene flow rate (g/h) | 20 | 40 | 60 |
| n-hexane flow rate (g/h) | 600 | 600 | 600 |
| hydrogen flow rate (mL/min) | 1 | 1 | 1 |
| primary catalyst mixed liquid flow rate (mL/h) | 50 | 50 | 50 |
| boron-containing compound mixed liquid flow rate (mL/h) | 30 | 30 | 30 |
| triisobutyl aluminum solution flow rate (mL/h) | 50 | 50 | 50 |
| site for adding the triisobutyl aluminum solution | 0.25m away from the reactor | 0.25m away from the reactor | 0.25m away from the reactor |
| catalyst polymerization activity (g polymer/mol catalyst) | 7.93×10⁶ | 8.22×10⁶ | 7.31×10⁶ |
| ethylene content (wt%) | 5.78 | 9.21 | 16.6 |
| ethylene dispersion degree (%) | 65 | 65 | 59 |
| MFR (g/10min) @190°C | 3.3 | 4.2 | 3.9 |
| density (g/cc) | 0.882 | 0.875 | 0.867 |

### Examples B11-B13

The polymerization procedure of Example B 1 was used except that the primary catalyst was dimethylsilyl bis(5,6,7,8-tetrahydro-2,5,5,8,8-pentamethylbenzindenyl)zirconium dichloride (the synthesis method of which could be found in U.S. patent US60/586465). The cocatalyst was the product MMAO-3A purchased from Nouryon Company. The primary catalyst mixed liquid and the cocatalyst mixed liquid were metered using pumps and mass-flow meters; they were combined in a pipeline, and then entered into the reactor through the pipeline having a length of 0.5 meters and an inner diameter (diameter) of 4.5 mm.

Specific process conditions and results were shown in Table B4.

**Table B4**

| | Example B11 | Example B12 | Example B13 |
|---|---|---|---|
| temperature (°C) | 90 | 90 | 90 |
| pressure (bar) | 30 | 30 | 30 |
| propylene flow rate (g/h) | 390 | 390 | 390 |
| ethylene flow rate (g/h) | 40 | 40 | 60 |
| n-hexane flow rate (g/h) | 600 | 600 | 600 |
| hydrogen flow rate (mL/min) | 1 | 2 | 1 |
| primary catalyst mixed liquid flow rate (mL/h) | 50 | 50 | 50 |
| cocatalyst mixed liquid flow rate (mL/h) | 50 | 50 | 50 |
| triisobutyl aluminum solution flow rate (mL/h) | 50 | 50 | 50 |
| site for adding the triisobutyl aluminum solution | 0.1m away from the reactor | 0.1m away from the reactor | 0.1m away from the reactor |
| catalyst polymerization activity (g polymer/mol catalyst) | 9.83×10⁷ | 7.12×10⁷ | 1.05×10⁸ |
| | | | |
| ethylene content (wt%) | 7.8 | 8.5 | 12.3 |
| ethylene dispersion degree (%) | 55 | 57 | 53 |
| MFR (g/10min) @190°C | 17.1 | 48 | 15.2 |
| density (g/cc) | 0.878 | 0.877 | 0.869 |

### Comparative Examples B1-B4

In Comparative Examples B 1-B4, the primary catalyst, the cocatalyst, and the alkyl aluminum were directly fed into the reactor.

| | Comparative Example B1 | | Comparative Example B2 | | Comparative Example B3 | | Comparative Example B4 | |
|---|---|---|---|---|---|---|---|---|
| temperature (°C) | 120 | | 85 | | 90 | | 90 | |
| pressure (bar) | 25 | | 30 | | 30 | | 30 | |
| propylene flow rate (g/h) | 380 | | 390 | | 390 | | 390 | |
| ethylene flow rate (g/h) | 60 | | 20 | | 40 | | 40 | |
| n-hexane flow rate (g/h) | 600 | | 600 | | 600 | | 600 | |
| hydrogen flow rate (mL/min) | 3 | | 1 | | 1 | | 2 | |
| primary catalyst mixed liquid flow rate (mL/h) | dimethylsilyl bis(5,6,7,8-tetrahydro-2,5,5,8,8-pentamethylb enzindenyl)d imethylhafni um | 30 | dimethylsilyl bis(5,6,7,8-tetrahydro-2,5,5,8,8-pentamethylb enzindenyl)d imethylhafni um | 50 | dimethylsilyl bis(5,6,7,8-tetrahydro-2,5,5,8,8-pentamethylb enzindenyl)d imethylhafni um | 50 | dimethylsilyl bis(5,6,7,8-tetrahydro-2,5,5,8,8-pentamethylb enzindenyl)zi rconium dichloride | 50 |
| cocatalyst mixed liquid flow rate (mL/h) | triphenylcarb enium tetrakis(pent afluoropheny l)borate | 30 | triphenylcarb enium tetrakis(pent afluoropheny l)borate | 60 | triphenylcarb enium tetrakis(pent afluoropheny l)borate | 30 | modified methyl aluminoxane | 50 |
| triisobutyl aluminum solution flow rate (mL/h) | 50 | | 50 | | 50 | | 50 | |
| site for adding the triisobutyl aluminum solution | directly entered into the reactor | | directly entered into the reactor | | directly entered into the reactor | | directly entered into the reactor | |
| catalyst polymerization activity (g polymer/mol catalyst) | 1.58×10⁶ | | 2.35×10⁶ | | 3.22×10⁵ | | 7.12×10⁵ | |
| | | | | | | | | |
| ethylene content (wt%) | 15.3 | | 5.01 | | 8.5 | | 8.5 | |
| ethylene dispersion degree (%) | 78 | | 75 | | 78 | | 72 | |
| MFR (g/10min) @190°C | 22 | | 15 | | 11 | | 105 | |
| density (g/cc) | 0.869 | | 0.883 | | 0.874 | | 0.876 | |

### Examples C1-C3

The first polymer component (i.e., the propylene-based copolymer of the present invention) and the second polymer component in the polypropylene composition of the present invention were each prepared by continuous polymerization in 1.8L polymerization kettles. The polymerization kettles were equipped with mechanical stirrers. The temperature of the polymerization kettles can be adjusted by controlling the jacket temperature via an oil bath. The temperature inside the reactors was set to 90°C. The polymerization kettles were connected with a propylene pipeline, an ethylene pipeline, an n-hexane pipeline and a catalyst injection pipeline. Solvent and monomer feeds to the reactors were measured by mass-flow controllers. The flow rate and pressure of materials were controlled with variable-speed diaphragm pumps. In the preparing of the first polymer component, the flow rate of propylene was 400g/h, the flow rate of ethylene was 70g/h, and the flow rate of n-hexane was 600g/h. In the preparing of the second polymer component, the flow rate of propylene was 390g/h, the flow rate of ethylene was 12g/h, and the flow rate of n-hexane was 600g/h.

The two polymer components were prepared from the primary catalyst, cocatalyst, and triisobutylaluminum under same conditions. The primary catalyst was dimethylsilyl bis (5,6,7,8-tetrahydro-2,5,5,8,8-pentamethylbenzindenyl)dimethylhafnium. See the U.S. patent US60/586465 for its synthesis method. The primary catalyst was mixed with the n-hexane solvent, and the concentration of the obtained primary catalyst mixed liquid was 0.1 µmol/mL. The boron-containing compound was a commercially-available compound, triphenylcarbenium tetrakis(pentafluorophenyl)borate, which was mixed with the n-hexane solvent. The concentration of the resulting boron-containing compound mixed liquid was 0.15 µmol/mL. The primary catalyst mixed liquid, the boron-containing compound mixed liquid and a triisobutyl aluminum solution (a solution in n-hexane having a concentration of 1 mmol/mL) were metered using pumps and mass-flow meters. The flow rate of the primary catalyst mixed liquid was 60 mL/h, and the flow rate of the cocatalyst mixed liquid was 50 mL/h. The primary catalyst mixed liquid and the boron-containing compound mixed liquid were combined in a pipeline, and then entered into the reactor through the pipeline having a length of 0.2 meters and an inner diameter (diameter) of 4.5 mm. The triisobutylaluminum solution (flow rate:50mL/h) was subsequently added to the pipeline.

The reactor was operated at 30 bar under stirring. A discharge pipeline was provided at the bottom of the polymerization kettle. Water was added to the discharge pipeline along with tri(2,4-ditert-butylphenyl) phosphite to terminate the polymerization reaction.

The first polymer component solution and the second polymer component solution obtained in the polymerization kettles were mixed in a stirring tank, and then the blended material was heated through a heat exchanger and then sent into a devolatilization device. Polymer pellets were obtained by using an extruder and an underwater pelletizer.

Specific process conditions and results were shown in Table C1. The DSC curves of the polypropylene compositions prepared in Examples C1-C3 were shown in Figures C1-C3 respectively, each of which had only one melting peak.

**Table C1**

| | Example C1 | Example C2 | Example C3 |
|---|---|---|---|
| first polymer component | | | |
| ethylene content (wt%) | 18.05 | 18.05 | 18.05 |
| ethylene dispersion degree (%) | 64 | 64 | 64 |
| mmm tacticity (%) | 91.5 | 91.5 | 91.5 |
| tacticity index m/r | 10.8 | 10.8 | 10.8 |
| | | | |

| second polymer component | | | |
|---|---|---|---|
| ethylene content (wt%) | 3.05 | 3.05 | 3.05 |
| ethylene dispersion degree (%) | 72 | 72 | 72 |
| mmm tacticity (%) | 94.5 | 94.5 | 94.5 |
| tacticity index m/r | 17.2 | 17.2 | 17.2 |
| | | | |

| composition properties | | | |
|---|---|---|---|
| first polymer component/second polymer component (wt/wt) | 60:40 | 80:20 | 95:5 |
| ethylene content (wt%) | 12.05 | 15.28 | 17.30 |
| MFR (g/10min) @190°C | 5.97 | 6.16 | 6.49 |
| density (g/cc) | 0.872 | 0.863 | 0.862 |
| glass transition temperature (°C) | -30.82 | -31.93 | -32.55 |
| melting point (°C) | 115.03 | 113.70 | 113.71 |
| initial melting temperature (°C) | 103.79 | 99.46 | 97.64 |
| melting enthalpy (J/g) | 29.58 | 18.14 | 18.83 |
| crystallinity (%) | 15.7 | 9.6 | 10.0 |

### Examples C4-C6

The first polymer component was prepared using the polymerization procedure of Example C1 except that the primary catalyst mixed liquid and the cocatalyst mixed liquid were metered using pumps and mass-flow meters; they were combined in a pipeline, and then entered into the reactor through the pipeline having a length of 2 meters and an inner diameter (diameter) of 4.5 mm.

The second polymer component was also prepared using the same polymerization procedure as the first polymer component, except that the primary catalyst was dimethylsilyl bisindenyl zirconium dichloride, and the cocatalyst was MMAO-3A purchased from Nouryon Company. Moreover, the primary catalyst and the cocatalyst were not premixed in the pipeline, but directly entered into the polymerization kettle through their respective pipelines.

Specific process conditions and results were shown in Table C2.

**Table C2**

| | Example C4 | Example C5 | Example C6 |
|---|---|---|---|
| first polymer component | | | |
| ethylene content (wt%) | 16.6 | 16.6 | 16.6 |
| ethylene dispersion degree (%) | 59 | 59 | 59 |
| mmm tacticity (%) | 89.1 | 89.1 | 89.1 |
| tacticity index m/r | 8.2 | 8.2 | 8.2 |
| | | | |

| second polymer component | | | |
|---|---|---|---|
| ethylene content (wt%) | 2.5 | 2.5 | 2.5 |
| ethylene dispersion degree (%) | 78 | 78 | 78 |
| mmm tacticity (%) | 93.3 | 93.3 | 93.3 |
| tacticity index m/r | 13.9 | 13.9 | 13.9 |
| | | | |

| composition properties | | | |
|---|---|---|---|
| first polymer component/second polymer component (wt/wt) | 60:40 | 80:20 | 95:5 |
| ethylene content (wt%) | 10.96 | 13.78 | 15.895 |
| MFR (g/10min) @190°C | 3.6 | 3.4 | 3.0 |
| density (g/cc) | 0.875 | 0.87 | 0.863 |
| glass transition temperature (°C) | -30.02 | -30.88 | -32.1 |
| melting point (°C) | 123.5 | 121.7 | 117.6 |
| initial melting temperature (°C) | 113.9 | 110.6 | 108.5 |
| melting enthalpy (J/g) | 37.3 | 26.1 | 18.8 |
| crystallinity (%) | 19.7 | 13.8 | 9.9 |

### Examples C7-C9

The first polymer component was prepared using the polymerization procedure of Example C1.

The second polymer component was also prepared using the same polymerization procedure as the first polymer component, except that the primary catalyst was dimethylsilyl bisindenyl zirconium dichloride, and the cocatalyst was MMAO-3A purchased from Nouryon Company. Moreover, the primary catalyst and the cocatalyst were not premixed in the pipeline, but directly entered into the polymerization kettle through their respective pipelines. In addition, no comonomer was added and it was a propylene homopolymerization.

Specific process conditions and results were shown in Table C3.

**Table C3**

| | Example C7 | Example C8 | Example C9 |
|---|---|---|---|
| first polymer component | | | |
| ethylene content (wt%) | 18.05 | 18.05 | 18.05 |
| ethylene dispersion degree (%) | 64 | 64 | 64 |
| mmm tacticity (%) | 91.5 | 91.5 | 91.5 |
| tacticity index m/r | 10.8 | 10.8 | 10.8 |
| | | | |

| second polymer component | | | |
|---|---|---|---|
| ethylene content (wt%) | 0 | 0 | 0 |
| mmm tacticity (%) | 92.1 | 92.1 | 92.1 |
| tacticity index m/r | 11.7 | 11.7 | 11.7 |
| | | | |

| composition properties | | | |
|---|---|---|---|
| first polymer component/second polymer component (wt/wt) | 60:40 | 80:20 | 95:5 |
| ethylene content (wt%) | 10.83 | 14.44 | 17.15 |
| MFR (g/10min) @190°C | 3.6 | 3.4 | 3.0 |
| density (g/cc) | 0.875 | 0.87 | 0.863 |
| glass transition temperature (°C) | -29.98 | -31.9 | -33.0 |
| melting point (°C) | 131.5 | 128.5 | 124.6 |
| initial melting temperature (°C) | 115.4 | 110.7 | 110.4 |
| melting enthalpy (J/g) | 28.8 | 23.1 | 8.5 |
| crystallinity (%) | 15.2 | 12.2 | 4.5 |

### Comparative Example D

### Comparative Examples D1-D3

The polymerization procedure of Example B 1 was used except that the primary catalyst was the BCNX catalyst produced by Sinopec, and the cocatalyst was a dicyclopentyldimethoxysilane. The primary catalyst mixed liquid and the cocatalyst mixed liquid were metered using pumps and mass-flow meters; they were combined in a pipeline, and then entered into the reactor through the pipeline having a length of 0.5 meters and an inner diameter (diameter) of 4.5 mm.

Specific process conditions and results were shown in Table D1.

**Table D1**

| | Comparative Example D1 | Comparative Example D2 | Comparative Example D3 |
|---|---|---|---|
| temperature (°C) | 70 | 70 | 70 |
| pressure (bar) | 30 | 30 | 30 |
| propylene flow rate (g/h) | 390 | 390 | 390 |
| ethylene flow rate (g/h) | 40 | 40 | 60 |
| n-hexane flow rate (g/h) | 600 | 600 | 600 |
| hydrogen flow rate (mL/min) | 1 | 2 | 1 |
| primary catalyst mixed liquid flow rate (mL/h) | 50 | 50 | 50 |
| cocatalyst mixed liquid flow rate (mL/h) | 100 | 100 | 100 |
| triisobutyl aluminum solution flow rate (mL/h) | 50 | 50 | 50 |
| site for adding the triisobutyl aluminum solution | 0.1m away from the reactor | 0.1m away from the reactor | 0.1m away from the reactor |
| catalyst polymerization activity (g polymer/mol catalyst) | 5.8×10⁵ | 7.9×10⁴ | 6.1×10⁵ |
| | | | |
| ethylene content (wt%) | 5.5 | 6.6 | 10.1 |
| ethylene dispersion degree (%) | 43 | 46 | 42 |
| MFR (g/10min) @190°C | 1.7 | 2.9 | 1.2 |
| density (g/cc) | 0.880 | 0.878 | 0.871 |

### Comparative Examples D4-D6

In the following comparative examples, the cocatalyst was MAO (which was a solution in toluene and had an activated aluminum content of 1.5 mmol/mL) from Nouryon Company. The polymerization procedure of Example B1 was used except that the primary catalyst was dimethylsilyl bis(5,6,7,8-tetrahydro-2,5,5,8,8-pentamethylbenzindenyl)zirconium dichloride (the synthesis method of which could be found in U.S. patent US60/586465). The cocatalyst was a solution of methyl aluminoxane in toluene. The primary catalyst mixed liquid and the cocatalyst mixed liquid were metered using pumps and mass-flow meters; they were combined in a pipeline, and then entered into the reactor through the pipeline having a length of 0.5 meters and an inner diameter (diameter) of 4.5 mm.

Specific process conditions and results were shown in Table D2.

It could be seen from the data given in Table D2 that the polymerization activity was significantly decreased and the ethylene dispersion degree was >75%.

**Table D2**

| | Comparative Example D4 | Comparative Example D5 | Comparative Example D6 |
|---|---|---|---|
| temperature (°C) | 90 | 90 | 90 |
| pressure (bar) | 30 | 30 | 30 |
| propylene flow rate (g/h) | 390 | 390 | 390 |
| ethylene flow rate (g/h) | 40 | 40 | 60 |
| n-hexane flow rate (g/h) | 600 | 600 | 600 |
| hydrogen flow rate (mL/min) | 1 | 2 | 1 |
| primary catalyst mixed liquid flow rate (mL/h) | 50 | 50 | 50 |
| cocatalyst mixed liquid flow rate (mL/h) | 50 | 50 | 50 |
| triisobutyl aluminum solution flow rate (mL/h) | 50 | 50 | 50 |
| site for adding the triisobutyl | 0.1m away | 0.1m away | 0.1m away |
| aluminum solution | from the reactor | from the reactor | from the reactor |
| catalyst polymerization activity (g polymer/mol catalyst) | 8.21×10⁵ | 7.33×10⁵ | 9.21×10⁵ |
| | | | |
| ethylene content (wt%) | 6.5 | 7.8 | 11.6 |
| ethylene dispersion degree (%) | 79 | 78 | 75 |
| MFR (g/10min) @190°C | 35 | 69 | 42 |
| density (g/cc) | 0.880 | 0.878 | 0.871 |

### Comparative Examples D7-D9

The polymerization procedure of Example B1 was used except that the primary catalyst mixed liquid and the cocatalyst mixed liquid in Comparative Examples D7 and D8 were metered using pumps and mass-flow meters; they were combined in a pipeline, and then entered into the reactor through the pipeline having a length of 3 meters and an inner diameter (diameter) of 4.5 mm. In Comparative Example D9, 500 mL of the primary catalyst mixed liquid and 300 mL of the cocatalyst mixed liquid were pre-mixed in a 1.2L glass container having a stirrer for half an hour, and then injected into the reactor by a pump.

Specific process conditions and results were shown in Table D3.

**Table D3**

| | Comparative Example D7 | Comparative Example D8 | Comparative Example D9 |
|---|---|---|---|
| temperature (°C) | 90 | 90 | 90 |
| pressure (bar) | 30 | 30 | 30 |
| propylene flow rate (g/h) | 390 | 390 | 390 |
| ethylene flow rate (g/h) | 20 | 40 | 60 |
| n-hexane flow rate (g/h) | 600 | 600 | 600 |
| hydrogen flow rate (mL/min) | 1 | 1 | 1 |
| primary catalyst mixed liquid flow rate (mL/h) | 50 | 50 | In total 80 |
| boron-containing compound mixed liquid flow rate (mL/h) | 30 | 30 | |
| triisobutyl aluminum solution flow rate (mL/h) | 50 | 50 | 50 |
| site for adding the triisobutyl aluminum solution | 0.25m away from the reactor | 0.25m away from the reactor | 0.25m away from the reactor |
| catalyst polymerization activity (g polymer/mol catalyst) | no polymerization activity | 1.1×10⁴ | no polymerization activity |

It could be seen that in Comparative Examples D7-D9, the activities of polymerization reactions were extremely low.

### Comparative Examples D10-D12

The polymerization procedure of Example B 1 was used except that the primary catalyst mixed liquid and the cocatalyst mixed liquid in Comparative Examples D10-D12 were metered using pumps and mass-flow meters; they were combined in a pipeline, and then entered into the reactor through the pipeline having a length of 5 meters and an inner diameter (diameter) of 4.5 mm.

Specific process conditions and results were shown in Table D4.

**Table D4**

| | Comparative Example D10 | Comparative Example D11 | Comparative Example D12 |
|---|---|---|---|
| temperature (°C) | 80 | 80 | 80 |
| pressure (bar) | 35 | 35 | 35 |
| propylene flow rate (g/h) | 390 | 390 | 390 |
| ethylene flow rate (g/h) | 20 | 40 | 60 |
| n-hexane flow rate (g/h) | 600 | 600 | 600 |
| primary catalyst mixed liquid flow rate (mL/h) | 50 | 50 | 50 |
| boron-containing compound mixed liquid flow rate (mL/h) | 30 | 30 | 30 |
| triisobutyl aluminum solution flow rate (mL/h) | 50 | 50 | 50 |
| site for adding the triisobutyl aluminum solution | added directly into reactor | added directly into reactor | added directly into reactor |
| catalyst polymerization activity (g polymer/mol catalyst) | no polymerization activity | no polymerization activity | 1.05×10⁴ |

It could be seen that in Comparative Examples D10-D12, the polymerization reactions were almost inactive.

### Comparative Example D13-D15

The polymerization procedure of Example B 1 was used except that the primary catalyst was dimethylsilyl bis(2-methyl-4-phenylindenyl)zirconium dichloride (purchased from Infinity Scientific (Panjin) Co., Ltd.). The cocatalyst was MAO (which was a solution in toluene and had an activated aluminum content of 1.5 mmol/mL) from Nouryon Company. The primary catalyst mixed liquid and the cocatalyst mixed liquid were metered using pumps and mass-flow meters; they were combined in a pipeline, and then entered into the reactor through the pipeline having a length of 0.5 meters and an inner diameter of 4.5 mm.

Specific process conditions and results were shown in Table D5.

**Table D5**

| | Comparative Example D13 | Comparative Example D14 | Comparative Example D15 |
|---|---|---|---|
| temperature (°C) | 90 | 90 | 90 |
| pressure (bar) | 30 | 30 | 30 |
| propylene flow rate (g/h) | 390 | 390 | 390 |
| ethylene flow rate (g/h) | 20 | 40 | 60 |
| n-hexane flow rate (g/h) | 600 | 600 | 600 |
| primary catalyst mixed liquid flow rate (mL/h) | 50 | 50 | 50 |
| cocatalyst mixed liquid flow rate (mL/h) | 50 | 50 | 50 |
| catalyst polymerization activity (g polymer/mol catalyst) | 7.6×10⁴ | 8.8×10⁴ | 1.1×10⁵ |
| | | | |
| ethylene content (wt%) | 4.5 | 6.7 | 12.3 |
| ethylene dispersion degree (%) | 78 | 77 | 78 |
| MFR (g/lOmin) @ 190°C | 62 | 150 | 330 |

### Example E: Test of aromatic hydrocarbon compound content

Samples were stored uncovered at room temperature (max. 25°C) for 7 days before the analysis. The test was carried out in accordance with the standard VDA278 of Verband der Automobilindustrie, wherein TDSA from Gerstel Company was used to perform the thermal desorption, HP6890 from Agilent Company was used to perform the gas chromatography in which the carrier gas was helium, and the separation column was 5% phenylmethylsiloxane. The test results were as follows:

| Example/ Comparative Example | Example B1 | Example B2 | Example B11 | Comparative Example D4 | Comparative Example D5 | Comparative Example D6 |
|---|---|---|---|---|---|---|
| Toluene content (ppm) | - | - | - | 810 | 960 | 840 |

| | | | | | | |
|---|---|---|---|---|---|---|
| Note: "-" means not detected | | | | | | |

Examples of the present invention have been described above. The above description is illustrative, not exhaustive, and the present application is not limited to the disclosed examples. Many modifications and variations will be apparent to those skilled in the art without departing from the scope and spirit of the described examples.

The end points of the ranges and any values disclosed herein are not limited to the precise ranges or values, and these ranges or values should be understood to include the values close to these ranges or values. For numerical ranges, the endpoints of the ranges with each other, the endpoints of the ranges with individual point values, and the individual point values with each other can be combined to give one or more new numerical ranges, and these new numerical ranges should be construed as specifically disclosed herein.

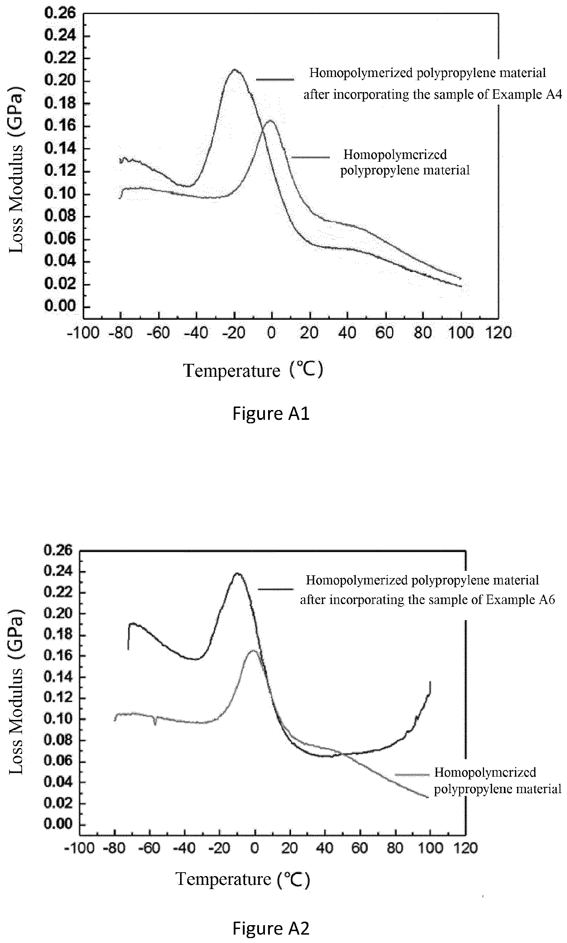

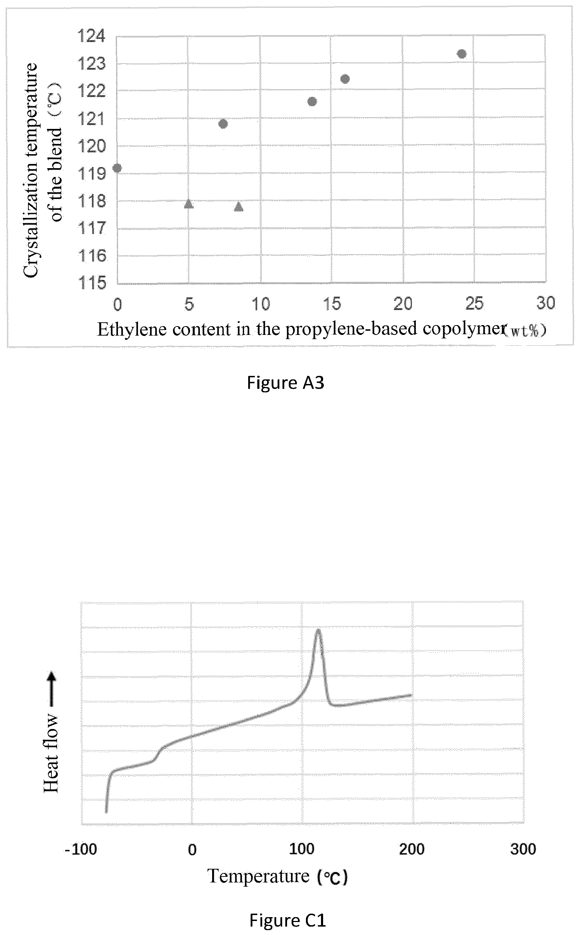

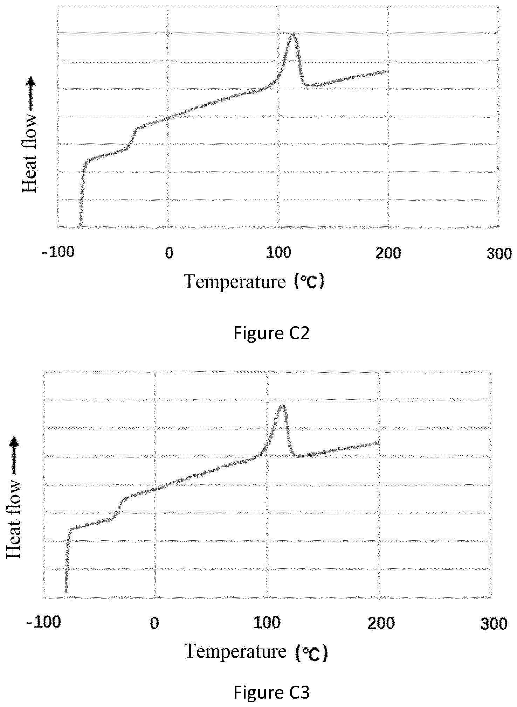

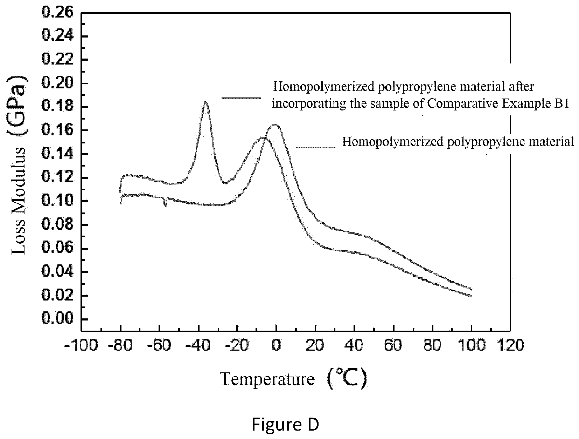

## Claims

1. A propylene-based copolymer, **characterized in that** the propylene-based copolymer contains propylene-derived structural units and comonomer-derived structural units, preferably the propylene-based copolymer contains 60-95wt%, preferably 75-93wt% of propylene-derived structural units and 5-40wt%, preferably 7-25wt% of comonomer-derived structural units; the comonomer is at least one of ethylene and C₄-C₂₀ alpha-olefins; the propylene-based copolymer has a comonomer dispersion degree D_{[PCP]/[C]} in the range of 50%-70%, wherein the comonomer dispersion degree D_{[PCP]/[C]}=[PCP]/[C]×100%, wherein [PCP] is the amount of monodispersed comonomer structural units in the propylene-based copolymer, wherein the monodispersed comonomer structural unit is a comonomer structural unit that exists in the form of a single comonomer structural unit inserted into a propylene segment, and [C] is the total amount of comonomer structural units in the propylene-based copolymer.

2. The propylene-based copolymer according to claim 1, wherein the propylene-based copolymer has at least one of the following characteristics:
the propylene-based copolymer has a mmm tacticity in the range of 75%-99%, preferably 80%-97%;
the propylene-based copolymer has a tacticity index m/r of 3-15;
the propylene-based copolymer has a density of 0.84-0.92g/cc, preferably 0.85-0.89g/cc;
the propylene-based copolymer has a melt flow rate of less than or equal to 100g/10min, preferably less than or equal to 20g/10min at 190°C under a load of 2.16kg.

3. The propylene-based copolymer according to any of claims 1-2, wherein the comonomer is at least one of ethylene, 1-butene, and 1-hexene, preferably ethylene.

4. The propylene-based copolymer according to any of claims 1-3, wherein the weight content of aromatic hydrocarbon compounds in the propylene-based copolymer is below 500ppm, preferably below 300ppm, still more preferably below 200ppm or below 100ppm, further preferably below 50ppm, most preferably free of aromatic hydrocarbon compounds.

5. A polymer composition, which comprises the propylene-based copolymer according to any one of claims 1-4; preferably the polymer composition comprises the propylene-based copolymer according to any of claims 1-3 and at least one additional polymer.

6. The polymer composition according to claim 5, wherein the polymer composition is a polypropylene composition and comprises the propylene-based copolymer according to any of claims 1-3 and a polypropylene.

7. The polymer composition according to claim 6, which is **characterized in that** the polypropylene composition contains:
(1) 30-99.5wt%, preferably 50-99wt%, more preferably 60-95wt% of the propylene-based copolymer according to any of claims 1-4; and
(2) 0.5-70wt%, preferably 1-50wt%, more preferably 5-40wt% of the polypropylene, wherein the polypropylene contains 95-100wt% of propylene-derived structural units and 0-5wt% of comonomer-derived structural units, wherein the comonomer is at least one of ethylene and C₄-C₂₀ alpha-olefins.

8. The polymer composition according to claim 7, wherein the polypropylene composition has at least one of the following characteristics:
the polypropylene composition has a glass transition temperature of - 29°C or less, preferably -30°C or less;
there is only one melting peak in a DSC curve of the polypropylene composition;
the polypropylene composition has a melting point of higher than 100°C and lower than 140°C, preferably lower than 130°C, more preferably lower than 120°C;
the polypropylene composition has an initial melting temperature of 80°C or higher, preferably 90°C or higher;
the polypropylene composition has a melting enthalpy of below 50J/g, preferably below 40J/g;
the polypropylene composition has a melting enthalpy of 0.5-50J/g, preferably 5-40J/g, more preferably 10-30J/g, most preferably 15-25J/g;
the polypropylene composition has a crystallinity of below 20%, preferably below 15%, more preferably 5-12%;
the polypropylene composition has a density of 0.84-0.92g/cc, preferably 0.86-0.89g/cc;
the polypropylene composition has a melt flow rate of less than or equal to 100g/10min, preferably less than or equal to 20g/10min at 190°C under a load of 2.16kg.

9. The polymer composition according to any of claims 6-8, wherein the polypropylene composition is obtained by mixing in melting form or solution form the propylene-based copolymer according to any of claims 1-4 and the polypropylene.

10. A process for preparing a propylene-based copolymer, preferably the propylene-based copolymer according to any of claims 1-4, which is **characterized in that** the process comprises:
(A) pre-contacting a primary catalyst and a cocatalyst to form in situ in a pipeline connected to a polymerization reactor a homogeneous ionic catalyst solution in a solvent; and
(B) sending the homogeneous ionic catalyst solution obtained in step (A) into the polymerization reactor through the pipeline connected to the polymerization reactor to contact with propylene monomer, one or more comonomers, and optionally hydrogen to perform an olefin polymerization to produce the propylene-based copolymer.

11. The process for preparing the propylene-based copolymer according to claim 10, wherein the primary catalyst is a metallocene catalyst; preferably at least one of the compounds represented by formula (I); 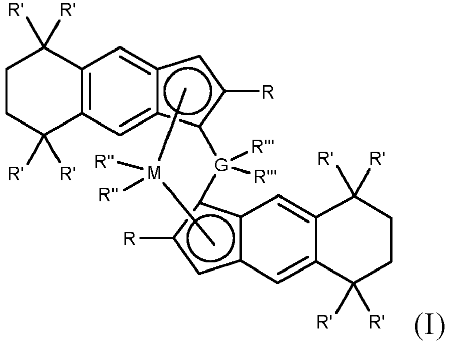
in the formula (I), M is a metal selected from titanium, hafnium, or zirconium;
G is carbon, silicon, germanium, tin or lead;
R and R' are each independently selected from hydrogen, and a substituted or unsubstituted C₁-C₂₀ hydrocarbyl; each R" is independently selected from a hydrogen atom, a halogen atom, a C₁-C₂₀ hydrocarbyl group, a C₁-C₂₀ alkoxy group or a C₆-C₂₀ aryloxy group, and these groups are straight, branched or cyclic and optionally further substituted with a halogen atom, a C₁-C₁₀ alkyl, a C₁-C₁₀ alkoxy, a C₆-C₁₀ aryl or a C₆-C₁₀ aryloxy; each R‴ is independently selected from a hydrogen atom, a C₁-C₂₀ hydrocarbyl group, a C₁-C₂₀ alkoxy group or a C₆-C₂₀ aryloxy group; preferably, R and R' are each independently selected from hydrogen, and a substituted or unsubstituted C₁-C₂₀ alkyl; each R" is independently selected from a hydrogen atom, a halogen atom, a C₁-C₁₂ alkyl group, a C₁-C₁₂ alkoxy group or a C₆-C₁₂ aryloxy group, these groups are straight, branched or cyclic and optionally further substituted with a halogen atom, a C₁-C₁₀ alkyl, a C₁-C₁₀ alkoxy, a C₆-C₁₀ aryl or a C₆-C₁₀ aryloxy; each R‴ is independently selected from a hydrogen atom, a C₁-C₁₂ alkyl group, a C₁-C₁₂ alkoxy group or a C₆-C₁₂ aryloxy group; more preferably, R and R' are each independently selected from hydrogen, and a substituted or unsubstituted C₁-C₁₂ alkyl; each R" is independently selected from a hydrogen atom, a halogen atom, a C₁-C₆ alkyl group, a C₁-C₆ alkoxy group or a C₆-C₁₂ aryloxy group, and these groups are straight, branched or cyclic and optionally further substituted with a halogen atom, a C₁-C₆ alkyl, a C₁-C₆ alkoxy, a C₆-C₁₀ aryl or a C₆-C₁₀ aryloxy; each R‴ is independently selected from a hydrogen atom, a C₁-C₆ alkyl group, a C₁-C₆ alkoxy group or a C₆-C₁₂ aryloxy group; further preferably, R and R' are each independently selected from methyl, ethyl, propyl, butyl, pentyl or hexyl; each R" is independently selected from a hydrogen atom, a halogen atom, a C₁-C₃ alkyl group, a C₁-C₃ alkoxy group or a C₆-C₈ aryloxy group, these groups are straight, branched or cyclic and optionally further substituted with a halogen atom, a C₁-C₃ alkyl, a C₁-C₃ alkoxy, a C₆-C₈ aryl or a C₆-C₈ aryloxy; each R‴ is independently selected from a hydrogen atom, a C₁-C₃ alkyl group, a C₁-C₃ alkoxy group or a C₆-C₈ aryloxy group; and most preferably, R and R' are each independently selected from methyl, isopropyl or tert-butyl; each R" is independently selected from a hydrogen atom, a halogen atom, methyl, ethyl or propyl; each R‴ is independently selected from a hydrogen atom, methyl, ethyl or propyl; and/or
the cocatalyst comprises a boron-containing compound-type cocatalyst and/or an aluminoxane-type cocatalyst.

12. The preparation process according to claim 10 or 11, wherein the length L of the pipeline through which the primary catalyst and the cocatalyst pass from the beginning of the pre-contacting to the entry into the polymerization reactor satisfies the following formula: 30×W/d²≤L≤1000×W/d², where the unit of L is m, W is the total flow rate of the primary catalyst, the co-catalyst and the solvent and its unit is kg/h, d is the inner diameter of the pipeline and its unit is mm; preferably L satisfies the following formula: 40×W/d²≤L≤900×W/d², more preferably, L satisfies the following formula: 50×W/d²≤L≤800×W/d².

13. The preparation process according to any of claims 10-12, wherein the primary catalyst and the cocatalyst are pre-contacted in such a manner that a primary catalyst mixed liquid and a cocatalyst mixed liquid are mixed, the primary catalyst mixed liquid is a mixture of the primary catalyst and a solvent, the cocatalyst mixed liquid is a mixture of the cocatalyst and a solvent.

14. The preparation process according to claim 11, wherein the boron-containing compound-type cocatalyst contains a structure represented by formula (II);
(Z)₄B⁻ (II)
in formula (II), Z is an optionally substituted phenyl derivative, wherein the optional substituent is selected from a C₁-C₆ haloalkyl or a halogen group;
preferably, the boron-containing compound-type cocatalyst is selected from a group consisting of triphenylcarbenium tetrakis(pentafluorophenyl)borate, N,N-dimethylcyclohexylammonium tetrakis(pentafluorophenyl)borate, N,N-dimethylbenzylammonium tetrakis(pentafluorophenyl)borate, N,N-dimethylphenylammonium tetrakis(pentafluorophenyl)borate, and mixtures thereof.

15. The preparation process according to any of claims 10-14, wherein the solvent is at least one of C₄-C₂₀ straight, branched, or cyclic aliphatic hydrocarbons; preferably at least one of n-butane, isobutane, n-pentane, isopentane, n-hexane, isohexane, n-heptane, isoheptane, n-octane, isooctane, cyclopentane, and cyclohexane; more preferably at least one of n-butane, isobutane, n-pentane, isopentane, n-hexane, isohexane, cyclopentane, and cyclohexane; further preferably at least one of n-pentane, isopentane, n-hexane, isohexane, and cyclohexane.

16. The preparation process according to any of claims 10-15, wherein the molar ratio of the cocatalyst to the central metal atom M in the primary catalyst is 0.5:1-5:1, preferably 1:1-2:1.

17. The preparation process according to any of claims 10-16, wherein after the beginning of the pre-contacting, an alkyl aluminum is added to the olefin polymerization system; wherein the alkyl aluminum is added to the pipeline or added to the polymerization reactor, preferably added to the pipeline;
preferably, the alkyl aluminum has a structure shown in formula (III);
AlR₃ (III)
in formula (III), R is C₁-C₁₂ hydrocarbyl, preferably C₁-C₁₂ alkyl, more preferably C₁-C₈ alkyl; preferably the alkyl aluminum is at least one of trimethyl aluminum, triethyl aluminum, triisobutyl aluminum, and triisooctyl aluminum;
preferably, the alkyl aluminum is added in the form of an alkyl aluminum solution, and the solvent of the alkyl aluminum solution is a C₄-C₂₀ straight, branched, or cyclic aliphatic hydrocarbon, preferably identical to the solvent used in the pre-contacting.

18. The preparation process according to any of claims 10-17, wherein the olefin polymerization is a bulk homogeneous polymerization, a supercritical polymerization, a solution polymerization or a near-critical dispersion polymerization, preferably solution polymerization; more preferably, a solvent for the solution polymerization is at least one of C₄-C₂₀ straight, branched or cyclic aliphatic hydrocarbons; preferably at least one of n-butane, isobutane, n-pentane, isopentane, n-hexane, isohexane, n-heptane, isoheptane, n-octane, isooctane, cyclopentane, and cyclohexane; more preferably at least one of n-butane, isobutane, n-pentane, isopentane, n-hexane, isohexane, cyclopentane and cyclohexane; further preferably at least one of isopentane, n-pentane, n-hexane, isohexane and cyclohexane; more preferably, the solvent for the solution polymerization is identical to the solvent used for the pre-contacting.

19. The preparation process according to any of claims 10-18, wherein the polymerization temperature of the olefin polymerization is 60-150°C and the polymerization pressure is 0.1-10 MPa.

20. Use of the propylene-based copolymer according to any of claims 1-3 for preparing a polypropylene composition, wherein the polypropylene composition includes a polypropylene and the propylene-based copolymer; preferably the propylene-based copolymer is used as a polypropylene crystallization promotor; or as a modifier for polypropylene material, preferably as a modifier for mechanical properties of polypropylene material.
